(19) Europäisches Patentamt
European Patent Office
Office européen des brevets

(11) Veröffentlichungsnummer: **0 040 172**
**B1**

(12) **EUROPÄISCHE PATENTSCHRIFT**

(45) Veröffentlichungstag der Patentschrift: **20.06.84**

(51) Int. Cl.³: **C 09 B 29/01**, C 09 B 31/02 // G03C5/52

(21) Anmeldenummer: **81810156.0**

(22) Anmeldetag: **24.04.81**

(54) **Azofarbstoffe, Verfahren zu ihrer Herstellung und Verwendung als Bildfarbstoffe in photographischen Silberfarbbleichmaterialien sowie das diese Azofarbstoffe enthaltende photographische Material.**

(30) Priorität: **30.04.80 CH 3343/80**

(43) Veröffentlichungstag der Anmeldung: **18.11.81 Patentblatt 81/46**

(45) Bekanntmachung des Hinweises auf die Patenterteilung: **20.06.84 Patentblatt 84/25**

(84) Benannte Vertragsstaaten: **BE CH DE FR GB IT LI**

(73) Patentinhaber: **CIBA-GEIGY AG, Postfach, CH-4002 Basel (CH)**

(72) Erfinder: **Lenoir, John, Dr., Avenue Général Guisan 34, CH-1700 Fribourg (CH)**

(56) Entgegenhaltungen:
**CH - A - 366 341**
**CH - A - 453 535**
**CH - A - 459 411**
**DE - A - 1 933 063**
**DE - A - 2 216 391**
**DE - B - 1 217 523**
**DE - B - 1 270 205**
**DE - C - 85 233**
**DE - C - 433 349**
**FR - A - 1 446 050**
**FR - A - 1 526 338**
**FR - A - 1 530 734**
**FR - A - 1 550 030**
**FR - A - 2 158 270**
**FR - A - 2 253 789**
**US - A - 3 177 198**

(56) Entgegenhaltungen: (Fortsetzung)
**US - A - 3 386 987**
**US - A - 3 464 971**
**US - A - 3 491 082**
**US - A - 3 525 733**
**US - A - 3 765 830**

**EP 0 040 172 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue, eine Formylgruppe enthaltende Azofarbstoffe, Verfahren zu deren Herstellung sowie die Verwendung dieser Verbindungen als Bildfarbstoffe in photographischen Silberfarbbleichmaterialien sowie das diese Azofarbstoffe enthaltende photographische Silberfarbbleichmaterial.

Azofarbstoffe, welche durch einen Formylsubstituenten gekennzeichnet sind, werden beispielsweise in der schweizerischen Patentschrift 366 341, in der deutschen Patentschrift 433 349 sowie auch in der US Patentschrift 3 415 810 beschrieben. Diese Farbstoffe werden zum Färben und Bedrucken von Textilmaterialien verwendet.

Es wurde nun gefunden, dass gewisse neue Azofarbstoffe, die eine Formylgruppe in para-Stellung zur Azogruppe enthalten, besonders zur Verwendung in photographischen Materialien geeignet sind.

Gegenstand der vorliegenden Erfindung sind daher Azofarbstoffe der Formel

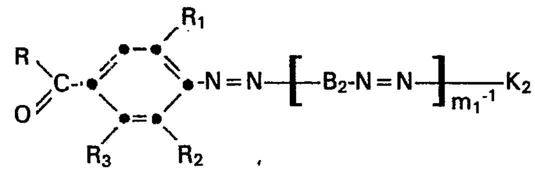 (1)

worin

$R_1$ Wasserstoff, gegebenenfalls mit Methoxy, Cyano oder Halogen substituiertes Alkylsulfon mit 1 bis 8 Kohlenstoffatomen, Halogen, Cyano oder Nitro,

$R_2$ Wasserstoff, Halogen, Cyano oder Nitro,

$R_3$ Wasserstoff, Alkyl mit 1 bis 4 Kohlenstoffatomen, Halogen oder Nitro,

$B_2$ ein Rest der Formel

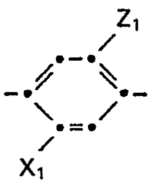 , 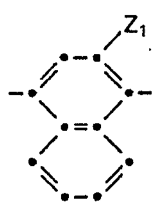 , 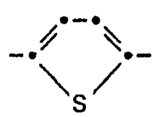 oder 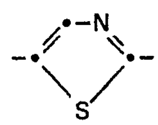 ist,

worin

$X_1$ gegebenenfalls mit Hydroxyl, Methoxy, Chlor, Brom, Cyano oder Nitro substituiertes Alkyl oder Alkoxy mit je 1 bis 6 Kohlenstoffatomen, Alkylsulfonylamino mit 1 bis 8 Kohlenstoffatomen, oder $-NHCOV_1$ ist, worin $V_1$ gegebenenfalls mit Halogen, Alkoxy mit 1 bis 4 Kohlenstoffatomen, Carbalkoxy mit 2 bis 5 Kohlenstoffatomen, gegebenenfalls mit Alkyl mit 1 bis 5 Kohlenstoffatomen substituiertes Phenoxy, $-P(O)(OCH_3)_2$ oder $-P(O)(OC_2H_5)_2$ substituiertes Alkyl mit 1 bis 14 Kohlenstoffatomen oder Alkoxy mit 1 bis 4 Kohlenstoffatomen ist, oder $X_1$ $-NHP(O)(OT_1)_2$ ist, worin $T_1$ gegebenenfalls mit Methoxy oder Äthoxy substituiertes Alkyl mit 1 bis 8 Kohlenstoffatomen, Phenyl oder Benzyl ist, und $Z_1$ Wasserstoff oder Alkoxy mit 1 bis 6 Kohlenstoffatomen ist,

$K_2$ ein Rest der Formel

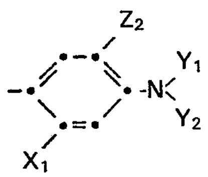 , 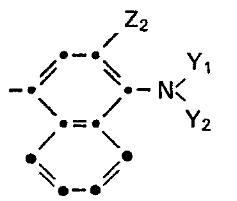 , 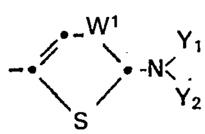 ,

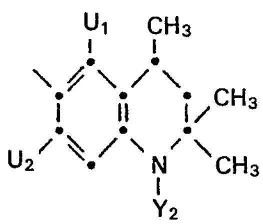 oder 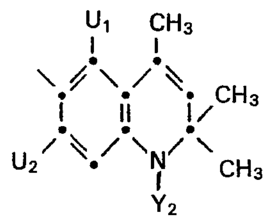 ist ,

worin

$U_1$ und $U_2$ Wasserstoff, $-NHCOA_1$, worin $A_1$ Alkyl mit 1 bis 4 Kohlenstoffatomen oder Phenyl ist, oder Alkyl oder Alkoxy mit je 1 bis 4 Kohlenstoffatomen sind, wobei immer einer der Substituenten $U_1$ und $U_2$ Wasserstoff bedeutet, $W^1$ -CH= oder -N=, $Y_1$ Wasserstoff oder gegebenenfalls mit Halogen, Cyano, Methoxy oder Hydroxyl substituiertes Alkyl mit 1 bis 5 Kohlenstoffatomen, $Y_2$ Wasserstoff, gegebenenfalls mit Methoxy, Chlor, Brom, Cyano oder Hydroxyl substituiertes Alkyl oder Alkoxyalkyl mit je 1(2) bis 12 Kohlenstoffatomen, Alkenyl mit 2 bis 4 Kohlenstoffatomen, Benzyl oder gegebenenfalls mit Alkyl mit 1 bis 5 Kohlenstoffatomen substituiertes Phenyl, $Z_2$ Wasserstoff oder gegebenenfalls mit Methoxy oder Halogen substituiertes Alkoxy mit 1 bis 6 Kohlenstoffatomen ist oder diejenigen Atome bedeutet, um zusammen mit $Y_1$ einen 5- oder

6gliedrigen, gesättigten oder ungesättigten, gegebenenfalls mit Methyl, Formyl, Acetyl oder Carbmethoxy substituierten Ring zu bilden,
$X_1$ die oben angegebene Bedeutung hat und
$m_1$ 1 oder 2 ist.

Ein weiterer Gegenstand der vorliegenden Erfindung betrifft ein Verfahren zur Herstellung der erfindungsgemässen Azofarbstoffe.

Gegenstand der vorliegenden Erfindung sind ferner die Verwendung der erfindungsgemässen Azofarbstoffe als Bildfarbstoffe in photographischen Silberfarbbleichmaterialien, das diese Farbstoffe enthaltende photographische Silberfarbbleichmaterial und die damit hergestellten photographischen Bilder.

Der Substituent $R_1$ in Verbindungen der Formel (1) hat neben Wasserstoff die Bedeutung von Alkylsulfon mit 1 bis 8, vorzugsweise 1 bis 5 Kohlenstoffatomen. Der Alkylrest, z.B. Methyl, Äthyl, Propyl, i-Propyl, Butyl, t-Butyl, Pentyl, i-Pentyl; Hexyl, Heptyl oder Octyl sowie deren Isomere, kann mit Methoxy, Cyano oder Halogen wie Chlor Brom oder Brom substituiert sein. Bedeutet $R_1$ Halogen, so sind Chlor und Brom bevorzugt. Desweiteren bedeutet $R_1$ Cyano oder Nitro.

Der Substituent $R_2$ ist Wasserstoff, Cyano oder Halogen wie z.B. Chlor oder Brom oder Nitro.

$R_3$ beudetet Wasserstoff oder Alkyl mit 1 bis 4 Kohlenstoffatomen. Methyl und Äthyl sind bevorzugte Alkylreste. Ist $R_3$ Halogen, so sind Chlor und Brom bevorzugt. Ferner bedeutet $R_3$ Nitro.

$B_2$ bedeutet Phenylen, Naphthylen, Thiophenylen und Tiazolylen. Besonders wertvolle Ringsysteme sind Phenylen und Naphthylen. Als Substituenten dieser Ringsysteme kommen $X_1$ und $Z_1$ in Frage:

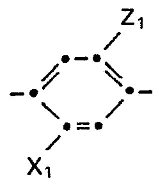 , 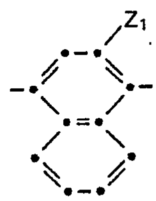 ; ferner 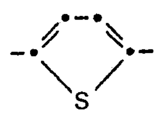 und 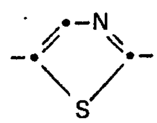

$X_1$ bedeutet Alkyl oder Alkoxy mit je 1 bis 6 Kohlenstoffatomen.

Als Alkylreste kommen die in der Erläuterung von $R_1$ genannten Reste in Frage. Geeignete Alkoxyreste leiten sich von diesen Alkylresten ab. Diese Alkyl- und Alkoxyreste können weiter substituiert sein, mit Hydroxyl, Methoxy, Chlor, Brom, Cyano oder Nitro. Methyl, Äthyl, Methoxy und Äthoxy sind die bevorzugten Alkyl- und Alkoxyreste. Ist $X_1$ -NHCO-$V_1$, so ist $V_1$ Alkyl mit 1 bis 14, insbesondere 1 bis 8, vorzugsweise 1 bis 4 Kohlenstoffatomen.

Als Beispiele können die in der Erläuterung von $R_1$ genannten Alkylreste sowie Nonyl, Decyl, Undecyl, Dodecyl, Tetradecyl und deren Isomere genannt werden. Die Alkylreste können substituiert sein mit Halogen, vorzugsweise Chlor oder Brom, insbesondere Fluor, Alkoxy mit 1 bis 4, insbesondere 1 oder 2 Kohlenstoffatomen, Carbalkoxy mit 2 bis 5 Kohlenstoffatomen oder Phenoxy, welches gegebenenfalls mit Alkyl mit 1 bis 5 Kohlenstoffatomen, vorzugsweise in para-Stellung, substituiert ist; ferner auch mit Resten der Formeln $-P(O)(OCH_3)_2$ oder $-P(O)(OC_2H_5)_2$. Besonders geeignete Liganden sind Halogen, Methoxy oder Äthoxy. Ferner bedeutet $V_1$ Alkoxy mit 1 bis 4 Kohlenstoffatomen. Ist $X_1$ $-NHP(O)(OT_1)_2$, so ist $T_1$ Alkyl mit bis 8, insbesondere 1 bis 4 Kohlenstoffatomen. Beispiele geeigneter Alkylreste wurden oben angegeben. Als Substituenten für die Alkylreste sind Methoxy und Äthoxy geeignet. Ferner hat $T_1$ die Bedeutung von Phenyl oder Benzyl.

Bedeutet $X_1$ Alkylsulfonylamino ($-NHSO_2$-Alkyl), so enthält der Alkylteil 1 bis 8, insbesondere 1 bis 6 Kohlenstoffatome. Beispiele geeigneter Alkylreste wurden oben angegeben. Der Substituent $Z_1$ bedeutet Wasserstoff oder Alkoxy mit 1 bis 6 Kohlenstoffatomen, wobei Methoxy und Äthoxy bevorzugte Alkoxyreste sind.

Der Substituent $K_2$ bedeutet einen Rest der Formel

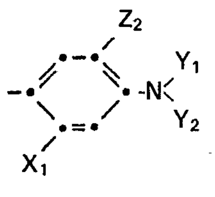 , 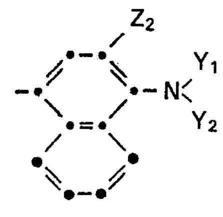 , 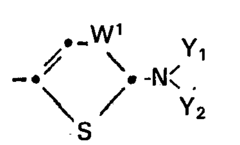 ,

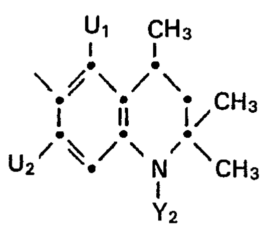 oder 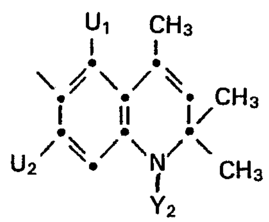

Darin bedeuten $U_1$ und $U_2$ unabhängig voneinander Wasserstoff, Alkyl oder Alkoxy mit je bis 4, insbesondere je 1 oder 2 Kohlenstoffatomen oder -NHCO-$A_1$, worin $A_1$ Alkyl mit 1 bis 4 Kohlenstoffatomen oder Phenyl ist. Von den Substituenten $U_1$ und $U_2$ muss immer einer Wasserstoff bedeuten. Wasserstoff und -NHCO-$A_1$ sind bevorzugte Reste für $U_1$ und $U_2$.

$W^1$ steht für -CH= oder -N=.

$X_1$ hat die oben angegebene Bedeutung.

$Y_1$ hat die Bedeutung von Wasserstoff oder Alkyl mit 1 bis 5 Kohlenstoffatomen. Beispiele geeigneter Alkylreste wurden oben angegeben. Die Alkylreste können mit Halogen, insbesondere Chlor, Cyano, Methoxy oder Hydroxyl weiter substituert sein.

Für $Y_2$ kommen neben Wasserstoff Alkyl und Alkoxyalkyl mit je 1 (2) bis 12, insbesondere je 1 (2) bis 8 Kohlenstoffatomen in Frage. Geeignete Alkylreste sind oben aufgezählt. Die Alkyl- und Alkoxyreste der Alkoxyalkylgruppen lassen sich von diesen Alkylresten ableiten. Dabei bezeichnet «2 bis 12» die Summe der Kohlenstoffatome aus dem Alkyl- und Alkoxyteil. Die Alkyl- und Alkoxyalkylreste sind gegebenenfalls mit Methoxy, Chlor, Brom, Cyano oder Hydroxyl substituiert. Ferner bedeutet $Y_2$ Alkenyl mit 2 bis 4 Kohlenstoffatomen, Benzyl oder Phenyl, wobei Phenyl gegebenenfalls mit Alkyl mit 1 bis 5 Kohlenstoffatomen, vorzugsweise in para-Stellung, substituiert sein kann.

Der Substituent $Z_2$ bedeutet neben Wasserstoff Alkoxy mit 1 bis 6, insbesondere 1 bis 4 Kohlenstoffatomen, vorzugsweise Methoxy. Als Substituenten an den Alkoxyresten kommen Halogen, z.B. Chlor oder Brom, oder Methoxy in Frage. Desweiteren stellt $Z_2$ diejenigen Atome dar, um zusammen mit $Y_1$ einen fünf-, vorzugsweise sechsgliedrigen, gesättigten oder ungesättigten Ring zu bilden. Substituenten an diesen Ringen können z.B. Methyl, Formyl, Acetyl oder Carbmethoxy sein.

$m_1$ bedeutet die ganzen Zahlen 1 oder 2.

Bevorzugt Verbindungen entsprechen der Formel

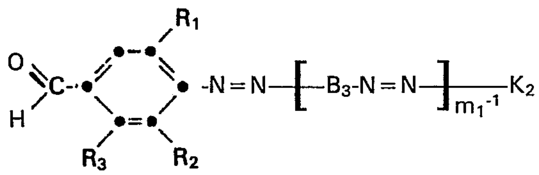

(4)

,

worin

$B_3$ 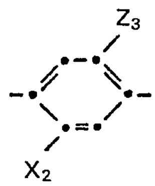 oder 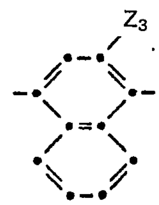 ist,

worin

$X_2$ Alkyl oder Alkoxy mit je oder 2 Kohlenstoffatomen oder -NHCO$V_2$ ist, worin $V_2$ gegebenenfalls mit Halogen, Alkoxy mit 1 bis 4 Kohlenstoffatomen, -P(O)$(OC_2H_5)_2$, Carbalkoxy mit 2 bis 5 Kohlenstoffatomen, Phenoxy oder alkylsubstituiertem Phenoxy mit 1 bis 5 Kohlenstoffatomen im Alkylrest substituiertes Alkyl mit 1 bis 14 Kohlenstoffatomen oder Alkoxy mit 1 bis 4 Kohlenstoffatomen ist; oder $X_2$ Alkylsulfonylamino mit 1 bis 6 Kohlenstoffatomen oder -NHP(O)$(OT_1)_2$ ist, worin $T_1$ die oben angegebene Bedeutung hat, $Z_3$ Wasserstoff, Methoxy oder Äthoxy ist und $m_1$ und $K_2$ die angegebene Bedeutung haben.

Desweiteren sind Verbindungen der Formel

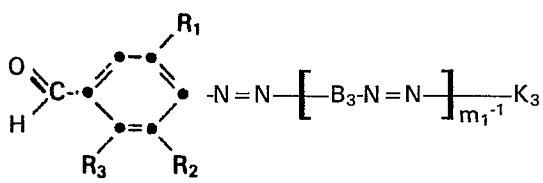

(5)

geeignet, worin

$K_3$

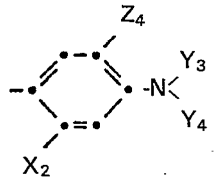

,

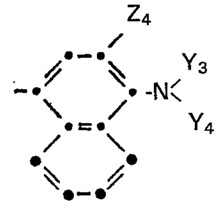

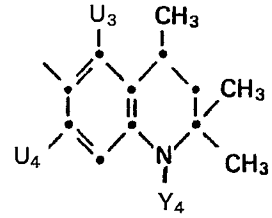

oder

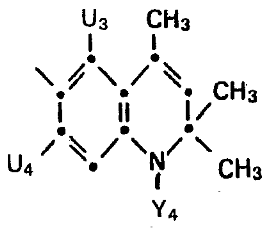

ist,

worin

$U_3$ und $U_4$ Wasserstoff, -$NHCOA_2$, worin $A_2$ Alkyl mit 1 bis 4 Kohlenstoffatomen ist; Alkyl oder Alkoxy mit je bis 4 Kohlenstoffatomen sind, wobei immer einer der Substituenten $U_3$ und $U_4$ Wasserstoff bedeutet,

$Y_3$ Wasserstoff oder Alkyl mit 1 bis 4 Kohlenstoffatomen,

$Y_4$ Wasserstoff, Alkyl oder Alkoxyalkyl mit je 1 (2) bis 8 Kohlenstoffatomen, Benzyl oder Phenyl,

$Z_4$ Wasserstoff oder Alkoxy mit 1 bis 4 Kohlenstoffatomen ist oder diejenigen Atome bedeutet, um zusammen mit $Y_3$ einen 6gliedrigen, gesättigten oder ungesättigten, mit Methyl substituierten Ring zu bilden, und

$B_3$, $X_2$ und $m_1$ die angegebene Bedeutung haben.

Wertvolle Verbindungen sind solche der Formel

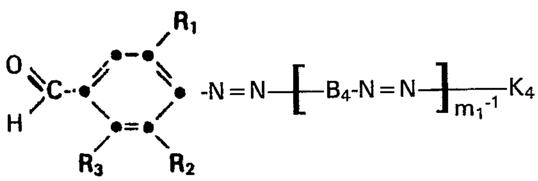

(6)

worin

$B_4$ 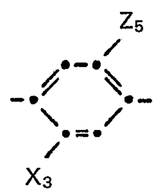 oder 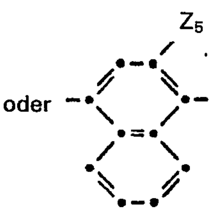 ist,

worin

$X_3$ Alkyl oder Alkoxy mit je 1 oder 2 Kohlenstoffatomen oder -$NHCOV_3$ ist, worin $V_3$ gegebenenfalls mit Fluor, Alkoxy mit 1 bis 4 Kohlenstoffatomen, -$P(O)(OC_2H_5)_2$, Carbalkoxy mit 2 bis 5 Kohlenstoffatomen, Phenoxy, mit alkylsubstituiertem Phenoxy mit 1 bis 5 Kohlenstoffatomen im Alkylteil substituiertes Alkyl mit 1 bis 8 Kohlenstoffatomen ist; oder $X_3$ Alkylsulfonylamino mit 1 bis 6 Kohlenstoffatomen od. -$NHP(O)(OT_2)_2$ ist, worin $T_2$ gegebenenfalls mit Methoxy oder Äthoxy substituiertes Alkyl mit 1 bis 4 Kohlenstoffatomen oder Phenyl ist,

$Z_5$ Wasserstoff oder Methoxy,

$K_4$ 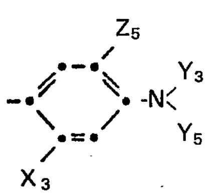 oder 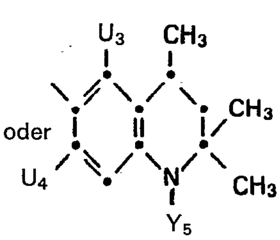 ist,

worin

$Y_5$ Wasserstoff, Alkyl oder Alkoxyalkyl mit je 1 (2) bis 4 Kohlenstoffatomen ist,

$X_3$, $Z_5$, $U_3$, $U_4$, $Y_3$ und $m_1$ die angegebene Bedeutung haben.

Von Interesse sind ferner Verbindungen der Formel

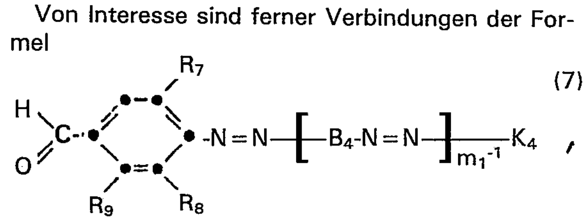

(7)

worin

$R_7$ Wasserstoff, Alkylsulfon mit 1 bis 4 Kohlenstoffatomen, Cyano oder Nitro,

$R_8$ Chlor, Brom, Cyano oder Nitro,

$R_9$ Wasserstoff oder Methyl ist und

$B_4$, $K_4$ und $m_1$ die angegebene Bedeutung haben.

Von besonderem Interesse sind die Verbindungen der Formel

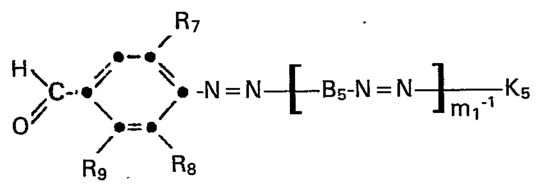

(8)

worin

$B_5$ 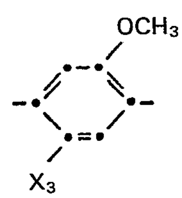 oder 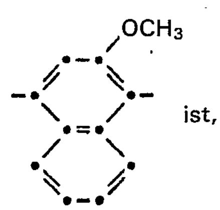 ist,

worin

$X_3$ die oben angegebene Bedeutung hat,

$K_5$ 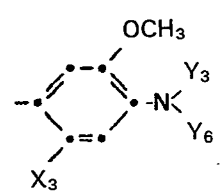 oder

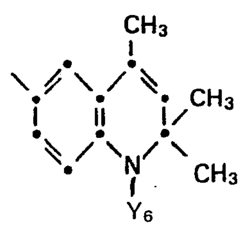 ist, und

worin

$Y_6$ Wasserstoff oder Alkyl mit 1 bis 4 Kohlenstoffatomen ist,

$X_3$, $Y_3$, $R_7$, $R_8$, $R_9$ und $m_1$ die oben angegebene Bedeutung haben.

Besonders bevorzugt sind die Verbindungen der Formel

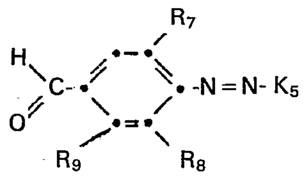

(9)

worin

$R_7$, $R_8$, $R_9$ und $K_5$ die oben angegebene Bedeutung haben.

Besonders wertvolle Verbindungen der Formel (9) sind die Verbindungen der Formeln

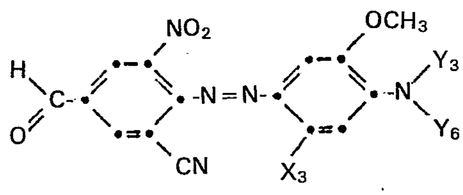

(10)

und

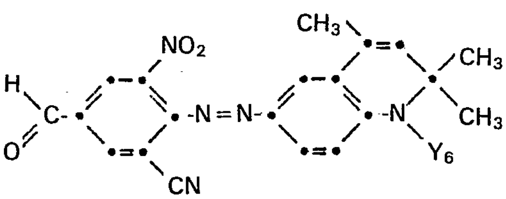

(11)

worin

$X_3$, $Y_3$ und $Y_6$ die angegebene Bedeutung haben.

Die Herstellung der Verbindungen der Formeln (1) und (4) bis (11) erfolgt durch Diazotierung einer Verbindung der Formel

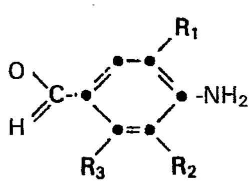

, (12)

worin $R_1$, $R_2$ und $R_3$ die oben angegebene Bedeutung haben, und anschliessender Kupplung mit einer Verbindung der Formel

$$H\text{-}K_2 \qquad (13)$$

worin $K_2$ die oben angegebene Bedeutung hat.

In einer Variante dieses Verfahrens zur Herstellung von Disazofarbstoffen der Formel (1), worin $m_1 = 2$ ist, wird Verbindung (12) diazotiert und mit einer Kupplungskomponente der Formel

$$H\text{-}B_2\text{-}NH_2 \qquad (14)$$

umgesetzt, worin $B_2$ die oben angegebene Bedeutung hat, anschliessend wieder diazotiert und dann mit der Kupplungskomponente der formel

$$H\text{-}K_2 \ , \qquad (13)$$

worin $K_2$ die oben angegebene Bedeutung hat, zum Disazofarbstoff umgesetzt.

Die Farbstoffe der Formel (1) können für verschiedene Zwecke, insbesondere aber als Bildfarbstoffe für das Silberfarbbleichverfahren verwendet werden. Die in Öl gelösten Verbindungen der Formeln (1) und (4) bis (11) zeigen mehrere Vorteile.

So zeichnen sie sich durch hohe Stabilität ihrer Emulsionen aus. Die Tendenz zur Micellbildung fehlt vollständig, wodurch weder die rheologischen Eigenschaften der Giesslösung noch die Farbdicke der photographischen Bilder negativ beeinflusst werden.

Das Öl wirkt nicht nur als Lösungsmittel für die Farbstoffe, sondern kann gleichzeitig Weichmacher für die Gelatine sein. Die mögliche Ablösung der photographischen Schichten vom Trägermaterial, die besonders unter feuchten Bedingungen eintreten kann, wird so weitgehend verhindert.

Bedingt durch die gute Löslichkeit der Farbstoffe in Öl, lässt sich eine grosse Aufnahmefähigkeit von Farbstoff in einem Öltröpfchen erreichen. Dadurch können photpgraphische Materialien mit sehr dünnen Schichten gegossen werden. Dies wirkt sich vorteilhaft auf die Bildschärfe aus.

Die Farbstoffe können aufgrund ihrer Unlöslichkeit in Wasser in sehr reiner Form gewonnen werden. Demgemäss lassen sich in üblicher, an sich bekannter Weise wertvolle photographische Silberfarbbleichmaterialien, herstellen, die auf einem Schichtträger mindestens eine Schicht mit einem Farbstoff der Formel (1) enthalten.

Als Träger für die Silberhalogenidemulsionsschichten kann ein transparentes, metallischreflektierendes oder vorzugsweise weiss-opakes Material verwendet werden, das vorzugsweise keine Flüssigkeit aus den Bädern aufzusaugen vermag.

Der Träger kann beispielsweise aus gegebenenfalls pigmentiertem Cellulosetriacetat oder Polyester bestehen. Wenn er aus Papierfilz besteht, muss dieser beidseitig lackiert oder mit Polyäthylen beschichtet sein. Auf mindestens einer Seite dieses Trägers befinden sich die lichtempfindlichen Schichten, vorzugsweise in der bekannten Anordnung, d.h. zu unterst eine rot sensibilisierte Silberhalogenidemulsionsschicht, die einen blaugrünen Azofarbstoff enthält, darüber eine grün sensibilisierte Silberhalogenidemulsionsschicht, die einen purpurfarbenen Azofarbstoff enthält und zu oberst eine blauempfindliche Silberhalogenidemulsionsschicht, die einen gelben Azofarbstoff enthält. Das Material kann auch Unterschichten, Zwischenschichten, Filterschichten und Schutzschichten enthalten, doch soll die gesamte Dicke der Schichten in der Regel 20 $\mu$ nicht übersteigen.

Die erfindungsgemässen Farbstoffe sind lipophil und werden im allgemeinen als Lösungen in hochsiedenden Lösungsmitteln in die Gelatine eingearbeitet. In den meisten Fällen genügt es die zu verwendenden Farbstoffe als Lösung in einem solchen Lösungsmittel, eventuell unter Zuhilfenahme eines leicht flüchtigen Hilfslösungsmittels bei normaler oder leicht erhöhter Temperatur zu einer wässerigen Gelatine-Lösung unter gutem Rühren zuzusetzen. Anschliessend wird die Mischung mit einer Silberhalogenid und/oder andere Materialien zu Erzeugung photographischer Bilder enthaltender Gelatine zusammengebracht, auf einer Unterlage in üblicher Weise zu einer Schicht gegossen und gegebenenfalls getrocknet.

Farbstoffe der Formel (1), in organischen Lösungsmitteln gelöst, können direkt zu einer Silberhalogenidgelatineemulsion und/oder andere Materialien zur Erzeugung photographischer Bilder enthaltenden Gelatine zugegeben werden. So ist es z.B. möglich, die Farbstofflösung erst unmittelbar vor dem Giessen zuzudosieren.

Anstelle des einfachen Rühens können auch die üblichen Verteilungsmethoden mittels Knet- und/ oder Scherkräften oder Ultraschall zur Anwendung gelangen.

Im weiteren ist es möglich, die Farbstoffe als solche oder zusammen mit Lösungsmitteln gemäss dem in der veröffentlichten CH-Patentanmeldung 4503/ 79-2 beschriebenen Verfahren unter Bildung einer Spontanemulsion in die Giesslösung einzuarbeiten.

Es ist auch möglich, den Farbstoff nicht als Lösung sondern in fester Form oder als Paste zuzugeben. Es ist desweiteren möglich, die Farbstoffe in Gegenwart von hochmolekularen Polymeren in die Gelatine einzuarbeiten. Von besonderem Interesse sind für diese Anwendung Latices.

Die Giesslösung kann noch weitere Zusätze wie Härtungsmittel, Komplexierungsmittel und Netzmittel sowie Sensibilisatoren und Stabilisatoren für das Silberhalogenid enthalten.

Die Farbstoffe gehen keine chemischen Reaktionen mit den lichtempfindlichen Materialien ein. Die Farbstoffe der Formel (1) sind sehr diffusionsfest, weil sie stabile, organische Lösungen bilden. Sie sind gegen Calciumionen unempfindlich und auf Weiss gut bleichbar.

Die Farbstoffe erzeugen bei der Zugabe zu den Giesslösungen weder einen Viskositätsanstieg noch eine wesentliche Viskositätsänderung beim Stehenlassen des Giessgemisches.

Die spektralen Absorptionen in Gelatine liegen so, dass die Farbstoffe der Formel (1) je nach Struktur zu einem Farbstofftripel, zusammengestellt aus je einem Gelb-, Purpur- oder Blaugrünfarbstoff kombiniert werden können, das über dem ganzen Dichtebereich für das Auge neutral erscheinende Grautöne aufweist.

Das die Farbstoffe der Formel (1) enthaltende photograpgische Silberfarbbleichmaterial zeichnet sich insbesondere durch brillante Farben, gute Farbwiedergabe und ausgezeichnete Lichtechtheit aus. Ein wichtiges Merkmal eines guten Farbkopiermaterials ist eine optimale Tonreproduktion und in allen Dichtebereichen ausgeglichenen Farbgradationen. Besonders die Kontrolle des Farbgleichgewichtes bereitet immer wieder Schwierigkeiten, da unterschiedliches Bleichverhalten der Azofarbstoffe nicht immer mit den herkömmlichen Methoden des Materialaufbaues, wie Abstimmung von Empfindlichkeit und Kontrast der eingesetzten Silberemulsionen ausgeglichen werden kann. Dadurch wird vielfach die Auswahl der Bildfarbstoffe, sowie insbesondere auch diejenige der Verarbeitungskomponenten im Bleichbad eingeschränkt.

Die Verarbeitung der belichteten Silberfarbbleichmaterialien erfolgt im allgemeinen in vier aufeinanderfolgenden Schritten:

1. Silberentwicklung
2. Farbbleichung
3. Silberbleichung
4. Fixierung.

Im ersten Schritt wird das bei der Belichtung entstehende latente Silberbild entwickelt. Im zweiten Schritt wird, entsprechend der vorliegenden bildmässigen Verteilung des Silbers, der dem Silber zugeordneten Bildfarbstoff ausgebleicht. Der dritte Schritt ist notwendig, um das nach der Farbbleichung noch vorhandene überschüssige Bildsilber zu reoxidieren. Im vierten Schritt wird das nunmehr gänzlich in Form von Halogeniden vorliegende Silber durch Herauslösen mit einem Komplexbildner, insbesondere einem Salz der Thioschwefelsäure, entfernt, um das fertige Bild gegenüber weiterer Belichtung unempfindlich zu machen, und das reine Farbbild von Trübung zu befreien.

Der zweite Verfahrenschritt, die Farbbleichung, erfolgt bei den üblichen bekannten Verfahren in stark saurem Medium, wobei zur Beschleunigung der Farbbleichung ein Katalysator zugesetzt wird. Die Bleichbäder enthalten zudem einen Silber-Komplexbildner oder Liganden. Beide Bestandteile, Katalysator und Ligand, sind notwendig, um die reduzierende Wirkung des metallischen, nichtdiffundierbaren Bildsilbers auf den ebenfalls nicht diffundierbaren Farbstoff zu übertragen. Die durch Reduktion am Bildsilber entstehende reduzierte Form des Katalysators dient dabei als Zwischenträger, welcher, nach Zurücklegung einer gewissen Diffusionsstrecke, den Farbstoff irreversibel reduziert und damit bleicht, und dabei selbst zur ursprünglichen Form reoxidiert wird.

Die Eigenschaft der reduzierten Stufe des Bleichkatalysators, zwischen Bildsilber und zu bleichendem Farbstoff frei zu diffundieren, ermöglicht es, Silber und Bildfarbstoff in einem gewissen Mass räumlich zu trennen, d.h. also den bleichbaren Farbstoff und die ihm zugeordnete Silberhalogenidemulsion nicht oder nur teilweise in der gleichen Schicht sondern in benachbarten Schichten anzuordnen. Solche Silberfarbbleichmaterialien sind. z.B. in den Deutschen Offenlegungsschriften 2036918, 2132835, und 2 132 836 beschrieben.

Eine Vereinfachung des Verarbeitungsprozesses, bei der die Farbstoffbleichung und die Silberbleichung zu einem einzigen Verfahrensschritt zusammengefasst werden, ist in der DE-OS 2 448 433 beschrieben worden.

Die kombinierten Farb- und Silberbleichbäder (Zubereitungen) für die Verarbeitung des belichteten Silberfarbbleichmaterials enthalten die Komponenten (a) bis (e) und gegebenenfalls (f):

(a) starke Säure, (b) wasserlösliches Jodid, (c) wasserlösliches Oxidationsmittel, (d) Oxidationsschutzmittel, (e) Bleichkatalysatoren, (f) Bleichbeschleuniger.

Die Menge der Bleichkatalysatoren, die in den vorzugsweise wässrigen Behandlungsbädern eingesetzt wird, kann in weiten Grenzen schwanken und beträgt etwa 0,05 bis 10 g/l Bleichbad.

Die Temperatur des Bleichbades liegt im allgemeinen zwischen 20 und 90°C, vorzugsweise zwischen 20 und 60°C, wobei natürlich bei höherer Temperatur die erforderliche Bearbeitungsdauer kürzer ist als bei tieferer Temperatur. Die Bleichbäder sind innerhalb des angegebenen Temperaturbereiches stabil. Im allgemeinen werden die für die Verarbeitung benötigten wässrigen Bleichzubereitungen in der Form verdünnter wässriger Lösungen, die die genannten Komponenten enthalten, verwendet. Es sind aber auch andere Methoden denkbar, z.B. die Anwendung in Pastenform.

Dieser Temperaturbereich gilt auch für die anderen Verarbeitungsschritte. Die wässrige Bleichzubereitung gemäss der vorliegenden Erfindung kann z.B. aus flüssigen, insbesondere wässrigen Konzentraten einzelner oder aller Komponenten [(a) bis (f)] hergestellt werden. Vorteilhaft verwendet man z.B. zwei flüssige Konzentrate, deren eines die starke Säure (a) und das Oxydationsmittel (c) und deren anderes die übrigen Komponenten (b), (d), (e) und gegebenenfalls (f) enthält, wobei im letzteren Konzentrat zur Verbesserung der Löslichkeit, insbesondere der Komponente (e) ein zusätzliches Lösungsmittel wie Äthyl-, Propyl- oder Benzylalkohol, Äthylenglykolmethyl- oder -äthyläther zugesetzt werden kann. Die zur Anwendung gelangenden wässrigen Bleichzubereitungen enthalten in der Regel die Komponenten (a) bis (f) in den folgenden Mengen:

(a) starke Säure: 10 bis 200 g/l,
(b) wasserlösliches Jodid: 2 bis 50 g/l, vorzugsweise 5 bis 25 g/l;
(c) wasserlösliches Oxydationsmittel: 1 bis 30 g/l;
(d) Oxydationsschutzmittel: 0,5 bis 10 g/l;
(e) Bleichkatalysatoren: 0,05 bis 10 g/l, und gegebenenfalls
(f) Bleichbeschleuniger: 1 bis 5 g/l.

Als starke Säuren [Komponente (a)], können die kombinierten Farb- und Silberbleichbäder Alkyl- oder Arylsulfonsäuren und insbesondere p-Toluolsulfonsäure, Schwefelsäure, Sulfaminsäure oder Trichloressigsäure enthalten. Gegebenenfalls können auch Gemische dieser Säuren eingesetzt werden. Der pH-Wert des Bleichbades ist insbesondere nicht grösser als 2 und vorzugsweise nicht grösser als 1.

Die wasserlöslichen Jodide [Komponente (b)] sind in der Regel Alkalimetalliodide, insbesondere Natrium- und Kaliumjodid.

Als Oxydationsmittel [Komponente (c)] verwendet man zweckmässig wasserlösliche aromatische Mononitro- und Dinitroverbindungen, sowie Anthrachinonsulfonsäurederivate. Die Verwendung solcher Oxydationsmittel dient zur Beeinflussung des Farbgleichgewichts und des Kontrasts der mit Farbbleichverfahren hergestellten Bilder und ist aus der deutschen Patentschrift 735 672, den britischen Patentschriften 539 190 und 539 509 und der japanischen Patentpublikation 22673/69 bekannt.

Die Mononitro- und Dinitroverbindungen sind vorzugsweise Mono- oder Dinitrobenzolsulfonsäuren, z.B. solche der Formel

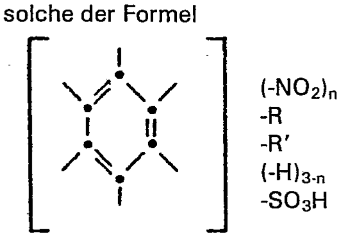

(14)

worin n gleich 1 oder 2 ist und R sowie R' Wasserstoff, Niederalkyl und 1 bis 4 Kohlenstoffatomen, Alkoxy, Hydroxyl, Amino oder Halogen (Chlor, Brom) bedeuten. Die Sulfonsäuren können als leichtlösliche Salze zugefügt werden. Geeignet sind z.B. die Natrium- oder Kaliumsalze der folgenden Säuren

O-Nitrobenzolsulfonsäure,
m-Nitrobenzolsulfonsäure,
2,4-Dinitrobenzolsulfonsäure,
3,5-Dinitrobenzolsulfonsäure,
3-Nitro-4-chlorbenzolsulfonsäure,
2-Chlor-5-nitrobenzolsulfonsäure,
4-Methyl-3,5-dinitrobenzolsulfonsäure,
3-Chlor-2,5-dinitrobenzolsulfonsäure,
2-Amino-4-nitrobenzolsulfonsäure,
2-Amino-4-nitro-5-methoxybenzolsulfonsäure,
4-Nitrophenol-2-sulfonsäure.

Die Verbindungen der Komponente (c) dienen neben ihrer Funktion als Silber-Bleichmittel zur Gradationsverflachung.

Als Oxydationsschutzmittel [Komponente (d)] werden mit Vorteil Reduktone oder wasserlösliche Mercaptoverbindungen verwendet. Geeignete Reduktone sind insbesondere aci-Reductone mit einer 3-Carbonylendiol-(1,2)-Gruppierung, wie Reduktin, Triose-Redukton oder vorzugsweise Ascorbinsäure. Als Mercaptoverbindungen kommen z.B. Thioglyzerin, insbesondere jedoch die Verbindungen der Formel

$$HS\text{-}C_qH_{2q}\text{-}B \qquad (15)$$

oder vorzugsweise

$$HS\text{-}(CH_2)_m\text{-}COOH \qquad (16)$$

in Betracht, worin q eine ganze Zahl im Wert von 2 bis 12, B eine Sulfonsäure- oder Carbonsäuregruppe und m eine der Zahlen 3 und 4 bedeuten. Als Oxydationsschutzmittel verwendbare Mercaptoverbindungen sind in der DE-A-2 258 076 und der DE-A-2 423 814 beschrieben. Als weitere Oxydationsschutzmittel geeignet sind Alkalimetall-, Erdalkalimetall- oder Ammoniumbisulfitaddukte von organischen Carbonylverbindungen, vorzugsweise Alkalimetall- oder Ammoniumbisulfitaddukte von Monoaldehyden mit 1 bis 4 oder Dialdehyden mit 2 bis 5 Kohlenstoffatomen (DE-A-2 737 142).

Beispielsweise genannt seien das besonders bevorzugte Formaldehydbisulfitaddukt, ferner die entsprechenden Addukte von Acetaldehyd, Propionaldehyd, Butyraldehyd oder Isobutyraldehyd, von Glyoxal, Malondialdehyd oder Glutardialdehyd. Gegebenenfalls sind auch die nachfolgend als Bleichbeschleuniger genannten tertiären wasserlöslichen Phosphine gleichzeitig als Oxydationsschutzmittel einsetzbar.

Geeignete Bleichbeschleuniger (f) sind z.B. quaternäre Ammoniumsalze wie sie aus den deutschen Offenlegungsschriften 2 139 401 und 2 716 136 bekannt sind. Bevorzugt handelt es sich dabei um quaternäre, gegebenenfalls substituierte Piperidin-, Piperazin-, Pyrazin-, Chinolin- oder Pyridinverbindungen, wobei letztere bevorzugt sind. Ferner können auch Tetraalkylammoniumverbindungen (Alkyl mit 1 bis 4 Kohlenstoffatomen) und Alkylendiammoniumverbindungen (Alkylen mit 2 bis 6 Kohlenstoffatomen) in Frage kommen.

Im einzelnen seien genannt:

Tetraäthylammoniumjodid; $(CH_3)_3\overset{\oplus}{N}(CH_2)_2\overset{\oplus}{N}(CH_3)_3 \cdot 2J^{\ominus}$; $(CH_3)_3\overset{\oplus}{N}(CH_2)_6\overset{\oplus}{N}(CH_3)_3 \cdot 2J^{\ominus}$, N-Methylpyridiniumchlorid; N-methylchinoliniumjodid; N-Hydroxyäthylpyridiniumchlorid; N-Hydroxypropylpyridiniumbromid; N-Methyl-2-Hydroxymethylpyridiniumjodid; N,N-Dimethylpiperidiniumjodid; N,N'-Dimethylpyraziniumfluorsulfat und $\gamma$-Picoliniumhydrogensulfat.

Weitere Bleichbeschleuniger sind die aus der DE-OS 2 651 969 bekannten wasserlöslichen tertiären Phosphine, die vorzugsweise mindestens eine Cyanoäthylgruppierung enthalten.

Sie entsprechen z.B. der Formel

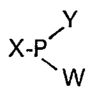 , (17)

worin W $-C_rH_{2r}CN$, $-C_rH_{2r}NO_2$ oder ein gegebenenfalls substituierter Arylrest oder ein heterocyclischer Rest, r 1 bis 25, X gegebenenfalls substituiertes Alkyl und Y Hydroxyalkyl, Alkoxyalkyl, Sulfoalkyl, Aminoalkyl (Alkyl je 1 bis 25, vorzugsweise 2 bis 4 Kohlenstoffatome), Phenyl, Sulfophenyl oder Pyridyl ist. Bevorzugte tertiäre Phosphine entsprechen der Formel

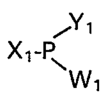 (18)

worin $X_1$ $-CH_2CH_2CN$ oder $-(CH_2)_2OCH_3$, $Y_1$ $-(CH_2)_2-SO_3^{\ominus}M^{\oplus}$, $-(CH_2)_3-SO_3^{\ominus}M^{\oplus}$, $-(CH_2)_4-SO_3^{\ominus}M^{\oplus}$, $-(CH_2)_2OCH_3$ oder $-CH_2N(C_2H_5)_2$, $W_1$ $-CH_2CH_2CN$ oder Phenyl und $M^{\oplus}$ ein Kation, insbesondere ein Alkalimetallkation, z.B. das Natrium- oder Kaliumkation ist.

Im einzelnen seien die folgenden Verbindungen genannt:

Bis-($\beta$-cyanoäthyl)-2-sulfoäthylphosphin (Natriumsalz),
Bis-($\beta$-cyanoäthyl)-3-sulfopropylphosphin (Natriumsalz),
Bis-($\beta$-cyanoäthyl)-4-sulfobutylphosphin (Natriumsalz),
Bis-($\beta$-cyanoäthyl)-2-methoxyäthylphosphin,
Bis-(2-methoxyäthyl)-($\beta$-cyanoäthyl)-phosphin,
($\beta$-Cyanoäthyl)-phenyl-3-sulfopropylphosphin (Natriumsalz),
($\beta$-Cyanoäthyl)-phenyl-2-methoxyäthylphosphin und
Bis-(2-methoxyäthyl)-phenylphosphin.

Alle Bäder können weitere übliche Zusätze wie z.B. Härtungsmittel, Netzmittel, optische Aufheller oder UV-Schutzmittel enthalten.

Zur Silberentwicklung können Bäder üblicher Zusammensetzung angewendet werden, z.B. solche, die als Entwicklersubstanz Hydrochinon und gegebenenfalls zusätzlich 1-Phenyl-3-pyrazolidinon enthalten. Gegebenenfalls enthält bereits das Silberentwicklungsbad einen Bleichkatalysator.

Das Fixierbad kann in bekannter und üblicher Weise zusammegesetzt sein. Als Fixiermittel dient z.B. Natriumthiosulfat oder mit Vorteil Ammoniumthiosulfat, gewünschtenfalls mit Zusätzen wie Natriumbisulfit und/oder Natriummetabisulfit.

*Beispiel 1*

Herstellung des Farbstoffs der Formel

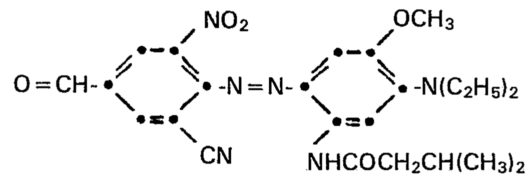

0,74 g (0,003 mol) 4-Amino-3-brom-5-nitro-benzaldehyd werden in 15 ml Acetonitril in Gegenwart von 0,3 ml Methansulfonsäure suspendiert. Das Gemisch wird auf 5°C gekühlt. 0,4 g Nitrosylschwefelsäure werden zugefügt. Das Gemisch wird bei 15°C 25 Minuten gerührt. 0,83 g N,N-Diäthyl-2-methoxy--5-isovalerylamidoanilin in 5 ml Acetonitril werden zugegeben. Das Gemisch wird mit 50 ml Eiswasser verdünnt, mit Natriumacetat gepuffert und 90 Minuten gerührt. Der Niederschlag wird abgesaugt und in 40 ml Acetonitril suspendiert. Der violette Farbsstoff wird abgesaugt und unter Vakuum getrocknet.

Man erhält 1,1 g (69%) des Zwischenprodukts der Formel

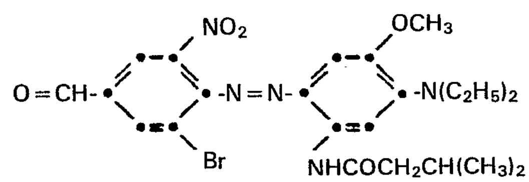 ,

Unter Stickstoff wird dieses Zwischenprodukt mit 0,25 g Kupfer(I)-cyanid in 25 ml N-Methyl-pyrrolidon bei 60°C 2 Stunden erwärmt.

Das Gemisch wird in Wasser gegossen und der blaue Niederschlag abgesaugt. Der rohe Farbstoff wird in Methylenchlorid gelöst. Die Lösung wird zweimal mit 40%iger Ammoniumrhodanid-Lösung, dann mit Wasser gewaschen. Das Lösungsmittel wird abgedampft. Der Rückstand wird aus Acetonitril umkristallisiert.

Man erhält 0,7 g (70%) Cyanfarbstoff mit folgenden physikalischen Daten: Smp. 181 - 183°C.

$\lambda_{max}^{CHCl_3}$ = 636 nm ($\epsilon$ = 79740).

Auf ähnliche Weise werden die in Tabelle 1 aufgeführten Farbstoffe der Formel

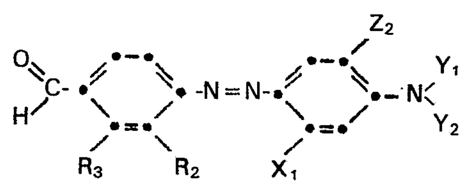 (100)

und die in Tabelle 2 aufgeführten Farbstoffe der Formel

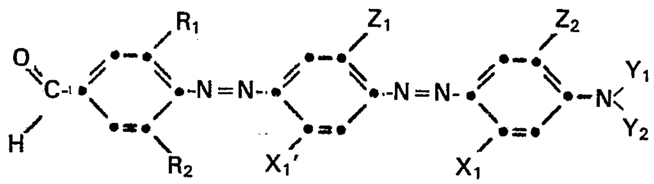

(100a)

hergestellt.

Tabelle 1

| Nr. | $X_1$ | $Y_1$ | $Y_2$ | $Z_2$ | $R_2$ | $R_3$ | $R_1$ | $\lambda_{max}^{CHCl_3}$ | $\epsilon_{mol}$ | $\lambda_{max}^{Gel}$ |
|---|---|---|---|---|---|---|---|---|---|---|
| 101 | $NHCOCH_2CH(CH_3)_2$ | $C_2H_5$ | $C_2H_5$ | $OCH_3$ | Br | H | Br | 515 | 26090 | 523 |
| 102 | » | » | » | $OCH_3$ | CN | H | $NO_2$ | 636 | 76020 | 636 |
| 103 | $NHCOCH(C_2H_5)C_4H_9$ | $C_4H_9$ | $C_4H_9$ | $OCH_3$ | CN | H | $NO_2$ | 641 | 81670 | 637 |
| 104 | » | $C_2H_5$ | $C_2H_5$ | $OCH_3$ | CN | H | $NO_2$ | 637 | 74530 | 636 |
| 105 | $NHCOCH(CH_3)_2$ | $C_4H_9$ | $C_4H_9$ | $OCH_3$ | CN | H | CN | 644 | 84560 | 642 |
| 106 | $NHCO(CH_2)_3CO_2C_2H_5$ | $C_2H_5$ | $C_2H_5$ | $OCH_3$ | CN | H | $NO_2$ | 637 | 73100 | 636 |
| 107 | $NHCOC_2H_4OCH_2CH(CH_3)_2$ | » | » | $OCH_3$ | CN | H | $NO_2$ | 627 | 78800 | 634 |
| 108 | $NHCOC_7F_{15}$ | » | » | $OCH_3$ | CN | H | CN | 639 | 87520 | 639 |
| 109 | 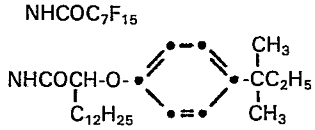 | » | » | $OCH_3$ | CN | H | $NO_2$ | 634 | 58330 | 627 |
| 110 | $NHPO(OC_2H_5)_2$ | H | $CH(CH_3)CH_2OCH_3$ | $OCH_3$ | $NO_2$ | H | H | 551 | 39350 | 550 |
| 111 | » | $C_2H_5$ | $C_2H_5$ | $OCH_3$ | CN | H | CN | 631 | 81320 | 630 |
| 112 | $NHPO(OC_4H_9)_2$ | H | $C_2H_4CN$ | H | H | H | H | 435 | 28220 | 471 |

Tabelle 1 (Fortsetzung)

| Nr. | $X_1$ | $Y_2$ | $Y_1$ | $Z_2$ | $R_2$ | $R_3$ | $R_1$ | $\lambda_{max}^{CHCl_3}$ | $\epsilon_{mol}$ | $\lambda_{max}^{Gel}$ |
|---|---|---|---|---|---|---|---|---|---|---|
| 113 | $NHPO(OC_4H_9)_2$ | $CH(CH_3)CH_2OCH_3$ | H | $OCH_3$ | $NO_2$ | H | H | 550 | 42530 | 550 |
| 114 | » | $C_2H_5$ | $C_2H_5$ | $OCH_3$ | CN | H | CN | 631 | 85600 | 631 |
| 115 | » | » | $C_2H_5$ | $OCH_3$ | CN | H | $NO_2$ | 629 | 71110 | 626 |
| 116 | $NHPO(OC_6H_5)_2$ | $C_4H_9$ | $C_4H_9$ | $OCH_3$ | CN | H | CN | 634 | 82990 | 632 |
| 117 | $NHPO(OC_2H_4OC_2H_5)_2$ | $C_2H_5$ | $C_2H_5$ | $OCH_3$ | CN | H | $NO_2$ | 630 | 69030 | 627 |
| 118 | $NHPO(OC_8H_{17})_2$ | » | » | $OCH_3$ | CN | H | $NO_2$ | 630 | 73810 | 626 |
| 119 | $NHSO_2C_6H_{13}$ | » | » | $OCH_3$ | CN | H | $NO_2$ | 635 | 62660 | 621 |
| 120 | $NHCOCH(C_2H_5)C_4H_9$ | $CH_2CH(CH_3)_2$ | $CH_2CH(CH_3)_2$ | $OCH_3$ | CN | H | $NO_2$ | 642 | 65670 | 636 |
| 121 | $NHCOC_2H_5$ | $C_2H_5$ | $C_2H_5$ | $OC_2H_4OCH_3$ | CN | H | $NO_2$ | 637 | 79910 | 635 |
| 122 | $NHCOCH_2CH(CH_3)_2$ | $C_4H_9$ | $C_4H_9$ | $OCH_3$ | CN | H | $NO_2$ | 640 | 78910 | 635 |
| 123 | $NHCOC_2H_4P(O)(OC_2H_5)_2$ | $C_2H_5$ | $C_2H_5$ | $OCH_3$ | CN | H | $NO_2$ | 636 | 74900 | 633 |
| 124 | $NHCOCH_2CH(CH_3)_2$ | $C_2H_5$ | 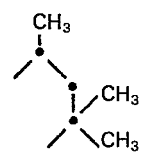 | | $NO_2$ | H | CN | 617 | 70870 | 614 |

Tabelle 2

| Nr. | $X_1$ | $Z_2$ | $Y_1$ | $Y_2$ | $X_1'$ | $Z_1$ | $R_1$ | $R_2$ | $\lambda_{max}^{CHCl_3}$ | $\epsilon_{mol}$ | $\lambda_{max}^{Gel}$ |
|---|---|---|---|---|---|---|---|---|---|---|---|
| 125 | $NHCOCH_2CH(CH_3)_2$ | $OCH_3$ | H | $CH(CH_3)CH_2OCH_3$ | $NHCOC_2H_5$ | $OC_2H_4OCH_3$ | Br | $NO_2$ | 696 | 43580 | 670 |
| 126 | $NHCOC_2H_5$ | $OC_2H_4OCH_3$ | $C_3H_7$ | $C_3H_7$ | $CH_3$ | $OCH_3$ | Br | $NO_2$ | 622 | 34840 | 635 |

*Anwendungsbeispiele*

*Beispiel 2*

0,6 mg Farbstoff der Formel

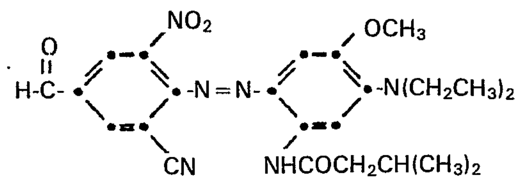

werden in 2 ml eines Gemisches von Äthylacetat und Trikresylphosphat (Mischungsverhältnis 9 : 1) gelöst und zu einer Mischung aus 6,6 ml 6%iger wässeriger Gelatinelösung, 0,9 ml destilliertem Wasser und 0,5 ml einer 8%igen Lösung des Natriumsalzes der Dibutylnaphthalinsulfonsäure gegeben und mit Ultraschall emulgiert.

2,5 ml der erhaltenen Emulsion werden mit 5 ml Wasser, 2,5 ml einer nicht sensibilisierten Gelatinesilberbromidjodidemulsion, die etwa 22 g Silber/kg Gelatine enthält, und 1 ml einer 1%igen Lösung eines Härters der Formel

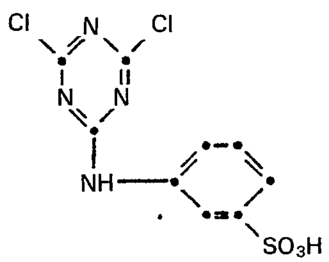

vermischt. Dieses Gemisch wird auf einen opaken Triacetatträger (Format 13 × 18 cm) gegossen und getrocknet. Hinter einem Stufenkeil wird das so erhaltene lichtempfindliche Material belichtet und bei 24°C wie folgt verarbeitet:

| | |
|---|---|
| Entwicklung | 6 Minuten |
| Wässerung | 4 Minuten |
| Silber- und Farbbleichung | 6 Minuten |
| Wässerung | 2 Minuten |
| Fixierung | 8 Minuten |
| Wässerung | 6 Minuten |
| Trocknung | |

Entwickler- und Fixierbäder sind übliche Bäder wie sie in der Schwarzweissphotographie verwendet werden. Das Silberfarbbleichbad besitzt pro Liter Lösung folgende Zusammensetzung:

| | |
|---|---|
| Sulfaminsäure | 100 g |
| m-Nitrobenzolsulfonsäure | 10 g |
| Kaliumjodid | 6 g |
| 2,3,6-Trimethylchinoxalin | 2 g |
| 4-Mercaptobuttersäure | 1 g |

Man erhält einen gegenläufigen blaugrünen Keil, der an der Stelle ursprünglich höchster Silberdichte vollständig auf weiss gebleicht ist. Das Bild zeichnet sich durch hohe Brillanz und Lichtechtheit aus.

*Beispiel 3*

25 mg Farbstoff der Formel

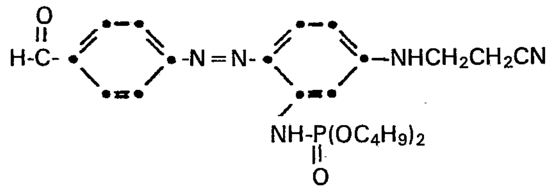

werden gemäss obigem Beispiel in lichtempfindliches photographisches Material eingearbeitet.

Nach der Belichtung wird bei 30°C wie folgt verarbeitet.

| | |
|---|---|
| Entwicklung | 3 Minuten |
| Wässerung | 1 Minute |
| Silber- und Farbbleichung | 5 Minuten |
| Wässerung | 1 Minute |
| Fixierung | 4 Minuten |
| Wässerung | 6 Minuten |
| Trocknung | |

Die verwendeten Bäder besitzen die obengenannte Zusammensetzung. Man erhält einen brillanten, lichtechten gelben Keil, der an der Stelle maximaler Silberdichte vollständig auf weiss gebleicht ist.

*Beispiel 4*

20 mg Farbstoff der Formel

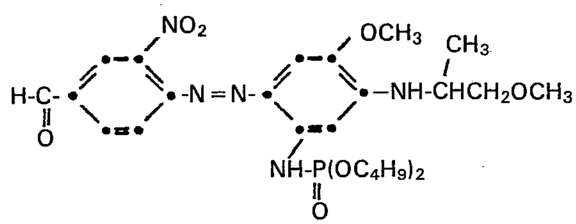

werden in 2 ml Äthylenchlorid und 0,2 ml Trikresylphosphat gelöst. Man gibt 7 ml 5%ige Gelatinelösung, 0,5 ml einer 8%igen wässerigen Lösung des Natriumsalzes der Dibutylnaphthalinsulfonsäure zu und emulgiert bis dieses Gemisch homogen ist. Die Farbstoffemulsion wird mit 7 ml 4%iger Gelatinelösung, 16 ml Wasser, 3 ml einer stabilisierten Silberhalogenidemulsion, die 24 g Silber pro kg Gelatine enthält, und 4 ml einer 1%igen Härterlösung versetzt. Diese Emulsion wird auf 0,1 $m^2$ eines opaken Trägers gegossen und getrocknet.

Ein auf 3,5 · 18 cm geschnittener Streifen wird mit weissem Licht belichtet und bei 24°C wie folgt verarbeitet:

| | |
|---|---|
| Entwicklerbad | 6 Minuten |
| Wässerung | 4 Minuten |
| Silberfarbbleichbad | 6 Minuten |
| Wässerung | 2 Minuten |
| Fixierbad | 8 Minuten |
| Wässerung | 6 Minuten |
| Trocknung | |

Als Entwicklerbad wird ein Bad benutzt, dessen Zusammensetzung in der US-Patentschrift 4 141 734 angegeben ist.

Als Silberfarbbleichbad wird eine Lösung verwendet, die pro Liter folgende Komponenten enthält:

| | |
|---|---|
| konzentrierte Schwefelsäure | 28 ml |
| Natriumjodid | 9 g |
| 4-Nitrophenol-2-sulfonsäure (Dinatriumsalz) | 6 g |

6-Methoxy-2,3-dimethylchinoxalin 1 g
Bis-(2-cyanäthyl)-(2-sulfoäthyl)-
Phosphin-(Natriumsalz) 3 g

Ferner wird ein übliches Fixierbad, das pro Liter-Lösung 200 g Natriumthiosulfat enthält, verwendet.

Man erhält einen brillanten, lichtechten Purpurkeil, der an der Stelle der ursprünglich grössten Silberdichte vollständig auf Weiss gebleicht ist.

Analog kann man auch die übrigen Farbstoffe der Tabellen 1 und 2 in photpgraphischen Silberhalogenidemulsionen einsetzen.

## Patentansprüche

1. Verbindungen der Formel

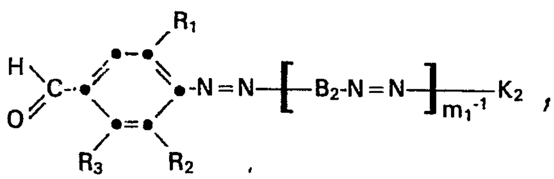

worin

$R_1$ Wasserstoff, gegebenenfalls mit Methoxy, Cyano oder Halogen substituiertes Alkylsulfon mit 1 bis 8 Kohlenstoffatomen, Halogen, Cyano oder Nitro,
$R_2$ Wasserstoff, Halogen, Cyano oder Nitro,
$R_3$ Wasserstoff, Alkyl mit 1 bis 4 Kohlenstoffatomen, Halogen oder Nitro,
$B_2$ ein Rest der Formel

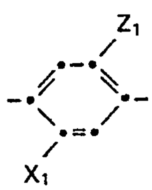 , 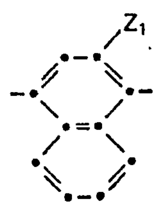 ,

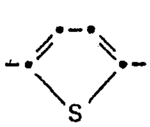 oder 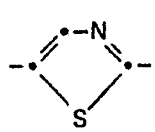 ist,

worin

$X_1$ gegebenenfalls mit Hydroxyl, Methoxy, Chlor, Brom, Cyano oder Nitro substituiertes Alkyl oder Alkoxy mit je 1 bis 6 Kohlenstoffatomen, Alkylsulfonylamino mit 1 bis 8 Kohlenstoffatomen, oder $-NHCOV_1$ ist, worin $V_1$ gegebenenfalls mit Halogen, Alkoxy mit 1 bis 4 Kohlenstoffatomen, Carbalkoxy mit 2 bis 5 Kohlenstoffatomen, gegebenenfalls mit Alkyl mit 1 bis 5 Kohlenstoffatomen substituiertes Phenoxy, $-P(O)(OCH_3)_2$ oder $-P(O)(OC_2H_5)_2$ substituiertes Alkyl mit 1 bis 14 Kohlenstoffatomen oder Alkoxy mit 1 bis 4 Kohlenstoffatomen ist, oder $X_1$ $-NHP(O)(OT_1)_2$ ist, worin $T_1$ gegebenenfalls mit Methoxy oder Äthoxy substituiertes Alkyl mit 1 bis 8 Kohlenstoffatomen, Phenyl oder Benzyl ist, und $Z_1$ Wasserstoff oder Alkoxy mit 1 bis 6 Kohlenstoffatomen ist,
$K_2$ ein Rest der Formel

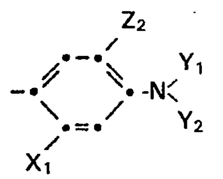 , 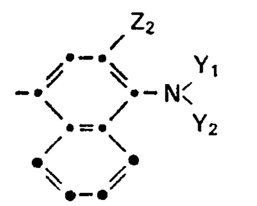 ,

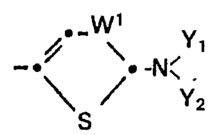 ,

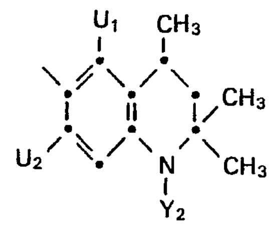 oder

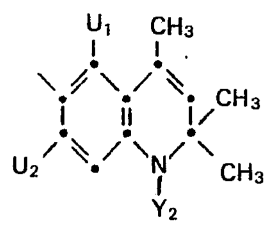 ist ,

worin

$U_1$ und $U_2$ Wasserstoff, $-NHCOA_1$, worin $A_1$ Alkyl mit 1 bis 4 Kohlenstoffatomen oder Phenyl ist, oder Alkyl oder Alkoxy mit je 1 bis 4 Kohlenstoffatomen sind, wobei immer einer der Substituenten $U_1$ und $U_2$ Wasserstoff bedeutet, $W^1$ -CH= oder -N=, $Y_1$ Wasserstoff oder gegebenenfalls mit Halogen, Cyano, Methoxy oder Hydroxyl substituiertes Alkyl mit 1 bis 5 Kohlenstoffatomen, $Y_2$ Wasserstoff, gegebenenfalls mit Methoxy, Chlor, Brom, Cyano oder Hydroxyl substituiertes Alkyl oder Alkoxyalkyl mit je 1(2) bis 12 Kohlenstoffatomen, Alkenyl mit 2 bis 4 Kohlenstoffatomen, Benzyl oder gegebenenfalls mit Alkyl mit 1 bis 5 Kohlenstoffatomen substituiertes Phenyl, $Z_2$ Wasserstoff oder gegebenenfalls mit Methoxy oder Halogen substituiertes Alkoxy mit 1 bis 6 Kohlenstoffatomen ist oder diejenigen Atome bedeutet, um zusammen mit $Y_1$ einen 5- oder 6gliedrigen, gesättigten oder ungesättigten, gegebenenfalls mit Methyl, Formyl, Acetyl oder Carbmethoxy substituierten Ring zu bilden,
$X_1$ die oben angegebene Bedeutung hat und
$m_1$ 1 oder 2 ist.

2. Verbindungen nach Anspruch 1, dadurch gekennzeichnet, dass sie der Formel

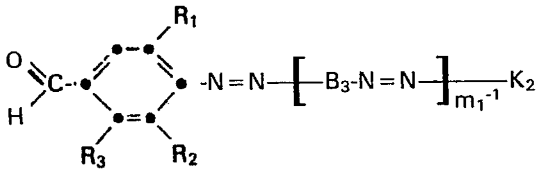

entsprechen, worin

$B_3$ 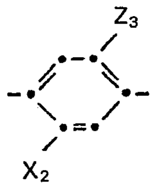 oder 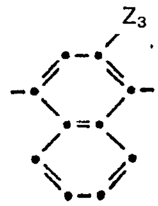 ist,

worin

$X_2$ Alkyl oder Alkoxy mit je oder 2 Kohlenstoffatomen oder $-NHCOV_2$ ist, worin $V_2$ gegebenenfalls mit Halogen, Alkoxy mit 1 bis 4 Kohlenstoffatomen, $-P(O)(OC_2H_5)_2$, Carbalkoxy mit 2 bis 5 Kohlenstoffatomen, Phenoxy oder alkylsubstituiertem Phenoxy mit 1 bis 5 Kohlenstoffatomen im Alkylrest substituiertes Alkyl mit 1 bis 14 Kohlenstoffatomen oder Alkoxy mit 1 bis 4 Kohlenstoffatomen ist; oder $X_2$ Alkylsulfonylamino mit 1 bis 6 Kohlenstoffatomen oder $-NHP(O)(OT_1)_2$ ist, worin $T_1$ die oben angegebene Bedeutung hat,

$Z_3$ Wasserstoff, Methoxy oder Äthoxy ist und

$m_1$ und $K_2$ die in Anspruch 1 angegebene Bedeutung haben.

3. Verbindungen nach Anspruch 2, dadurch gekennzeichnet, dass sie der Formel

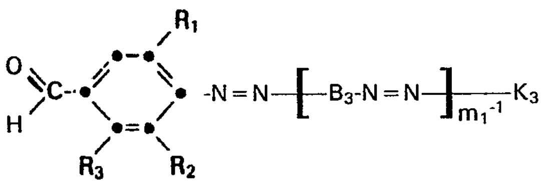

entsprechen, worin

$K_3$

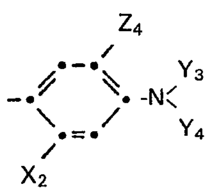 , 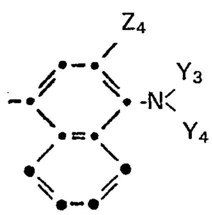 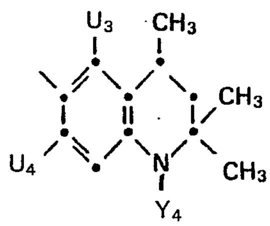 oder

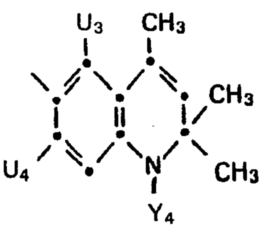 ist,

worin

$U_3$ und $U_4$ Wasserstoff, $-NHCOA_2$, worin $A_2$ Alkyl mit 1 bis 4 Kohlenstoffatomen ist; Alkyl oder Alkoxy mit je bis 4 Kohlenstoffatomen sind, wobei immer einer der Substituenten $U_3$ und $U_4$ Wasserstoff bedeutet,

$Y_3$ Wasserstoff oder Alkyl mit 1 bis 4 Kohlenstoffatomen,

$Y_4$ Wasserstoff, Alkyl oder Alkoxyalkyl mit je 1 (2) bis 8 Kohlenstoffatomen, Benzyl oder Phenyl,

$Z_4$ Wasserstoff oder Alkoxy mit 1 bis 4 Kohlenstoffatomen ist oder diejenigen Atome bedeutet, um zusammen mit $Y_3$ einen 6gliedrigen, gesättigten oder ungesättigten, mit Methyl substituierten Ring zu bilden, und

$B_3$, $X_2$ und $m_1$ die in Anspruch 2 angegebene Bedeutung haben.

4. Verbindungen nach Anspruch 3, dadurch gekennzeichnet, dass sie der Formel

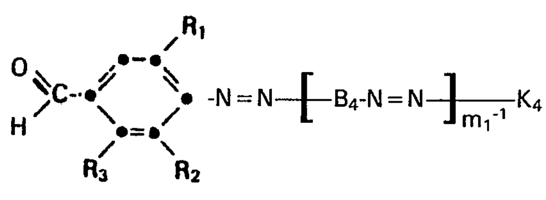

entsprechen, worin

$B_4$ 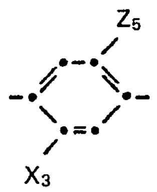 oder 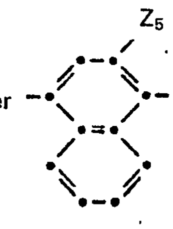 ist,

worin

$X_3$ Alkyl oder Alkoxy mit je 1 oder 2 Kohlenstoffatomen oder $-NHCOV_3$ ist, worin $V_3$ gegebenenfalls mit Fluor, Alkoxy mit 1 bis 4 Kohlenstoffatomen, $-P(O)(OC_2H_5)_2$, Carbalkoxy mit 2 bis 5 Kohlenstoffatomen, Phenoxy, mit alkylsubstituiertem Phenoxy mit 1 bis 5 Kohlenstoffatomen im Alkylteil substituiertes Alkyl mit 1 bis 8 Kohlenstoffatomen ist; oder $X_3$ Alkylsulfonylamino mit 1 bis 6 Kohlenstoffatomen od. $-NHP(O)(OT_2)_2$ ist, worin $T_2$ gegebenenfalls mit Methoxy oder Äthoxy substituiertes Alkyl mit 1 bis 4 Kohlenstoffatomen oder Phenyl ist,

$Z_5$ Wasserstoff oder Methoxy,

$K_4$ 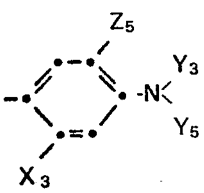 oder 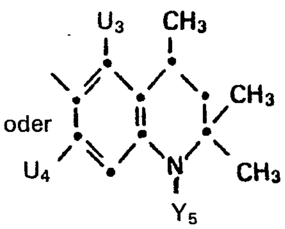 ist,

worin

$Y_5$ Wasserstoff, Alkyl oder Alkoxyalkyl mit je 1(2) bis 4 Kohlenstoffatomen ist,

$X_3$ und $Z_5$ die oben angegebenen Bedeutungen haben und

$Y_3$, $U_3$, $U_4$ und $m_1$ die in Anspruch 3 angegebene Bedeutung haben.

5. Verbindungen nach Anspruch 4, dadurch gekennzeichnet, dass sie der Formel

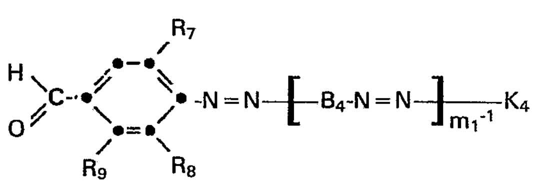

entsprechen, worin

$R_7$ Wasserstoff, Alkylsulfon mit 1 bis 4 Kohlenstoffatomen, Cyano oder Nitro,

$R_8$ Chlor, Brom, Cyano oder Nitro,

$R_9$ Wasserstoff oder Methyl ist und

$B_4$, $K_4$ und $m_1$ die angegebene Bedeutung haben.

6. Verbindungen nach Anspruch 5, dadurch gekennzeichnet, dass sie der Formel

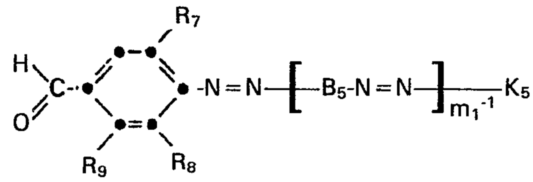

entsprechen, worin

$B_5$ 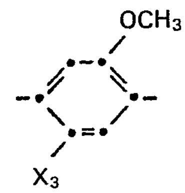 oder 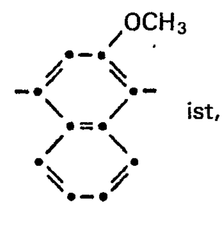 ist,

worin

$X_3$ die in Anspruch 4 angegebene Bedeutung hat,

$K_5$ 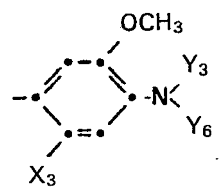 oder

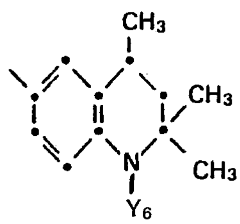 ist,

worin

$Y_6$ Wasserstoff oder Alkyl mit 1 bis 4 Kohlenstoffatomen ist,

$X_3$ die oben angegebene Bedeutung und

$Y_3$ die in Anspruch 4 genannte Bedeutung hat, und

$R_7$, $R_8$, $R_9$ und $m_1$ die in Anspruch 5 angegebene Bedeutung haben.

7. Verbindungen nach Anspruch 6, dadurch gekennzeichnet, dass sie der Formel

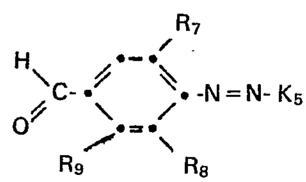

entsprechen, worin

$R_7$, $R_8$, $R_9$ und $K_5$ die in Anspruch 6 angegebene Bedeutung haben.

8. Verbindungen nach Anspruch 7, dadurch gekennzeichnet, dass sie den Formeln

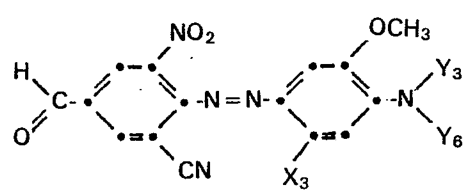

oder

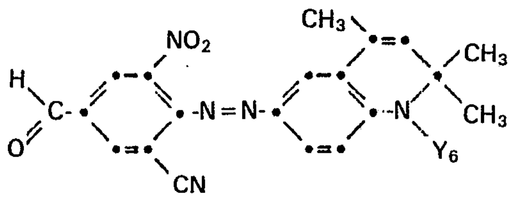

entsprechen, worin
$X_3$, $Y_3$ und $Y_6$ die in Anspruch 6 angegebene Bedeutung haben.

9. Verfahren zur Herstellung der Verbindungen nach Anspruch 1, dadurch gekennzeichnet, dass man eine Verbindung der Formel

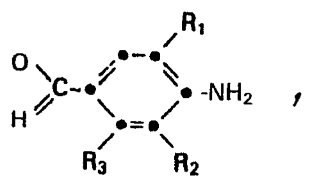

worin $R_1$, $R_2$ und $R_3$ die in Anspruch 1 angegebene Bedeutung haben, diazotiert und mit einer Verbindung der Formel

$H\text{-}K_2$

kuppelt, worin $K_2$ die in Anspruch 1 angegebene Bedeutung hat.

10. Verfahren zur Herstellung der Verbindungen nach Anspruch 1, dadurch gekennzeichnet, dass man eine Verbindung der Formel

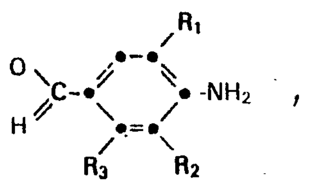

worin $R_1$, $R_2$ und $R_3$ die in Anspruch 1 angegebene Bedeutung haben, diazotiert und mit einer Kupplungskomponente der Formel

$H\text{-}B_2\text{-}NH_2$

umsetzt, worin $B_1$ die in Anspruch 1 angegebene Bedeutung haben, diazotiert und mit einer Kupplungskomponente der Formel

$H\text{-}K_2$

kuppelt, worin $K_2$ die in Anspruch 1 angegebene Bedeutung hat.

11. Verwendung der Verbindungen nach einem der Ansprüche 1 bis 8 in einem photographischen Silberfarbbleichmaterial.

12. Photographisches Silberfabbleichmaterial, dadurch gekennzeichnet, dass es auf einem Träger mindesens eine Schicht mit einer Verbindung nach einem der Ansprüche 1 bis 8 enthält.

13. Das mit dem photographischen Silberfarbbleichmaterial nach Anspruch 12 hergestellte photographische Bild.

## Claims

1. A compound of the formula

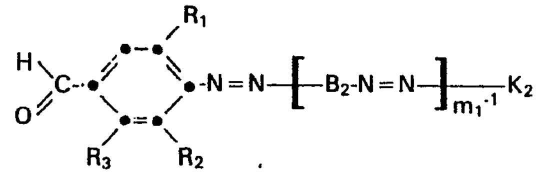

in which $R_1$ is hydrogen, substituted or unsubstituted $C_1$-$C_8$alkylsulfone, halogen, cyano or nitro, $R_2$ is hydrogen, halogen, cyano or nitro, $R_3$ is hydrogen, $C_1$-$C_4$alkyl, halogen or nitro, $B_2$ is a radical of the formula

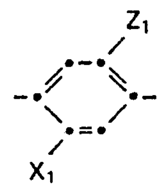
,
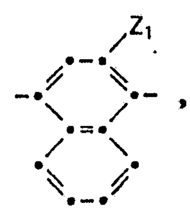
,

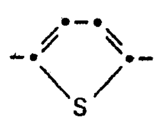
or
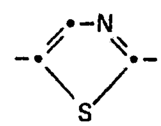

wherein $X_1$ is $C_1$-$C_6$alkyl or $C_1$-$C_6$alkoxy, each unsubstituted or substituted by hydroxyl, methoxy, chlorine, bromine, cyano or nitro, or is $C_1$-$C_8$alkylsulfonylamino, or $-NHCOV_1$, wherein $V_1$ is $C_1$-$C_{14}$alkyl or $C_1$-$C_4$alkoxy, each unsubstituted or substituted by halogen, $C_1$-$C_4$alkoxy, $C_2$-$C_5$carbalkoxy, phenoxy which is unsubstituted or substituted by $C_1$-$C_5$alkyl, or by $-P(O)(OCH_3)_2$ or $-P(O)(OC_2H_5)_2$; $-NHP(O)(OT_1)_2$, wherein $T_1$ is $C_1$-$C_8$ alkyl which is unsubstituted or substituted by methoxy or ethoxy, or is phenyl or benzyl, and $Z_1$ is hydrogen or $C_1$-$C_6$alkoxy; $K_2$ is a radical of the formula

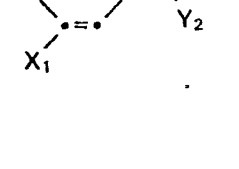
,
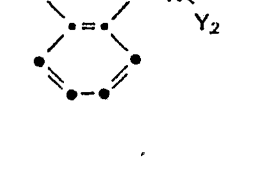
,

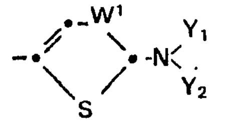
,

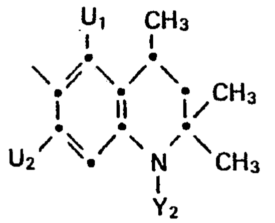

or

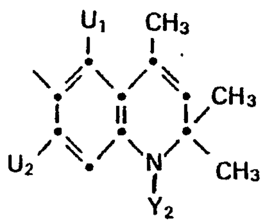

in which $U_1$ and $U_2$ are hydrogen, $-NHCOA_1$, wherein $A_1$ is $C_1$alkyl or phenyl, or are $C_1$-$C_4$alkyl or $C_1$-$C_4$alkoxy, with the proviso that one of $U_1$ and $U_2$ is always hydrogen, $W^1$ is -CH= or -N=, $Y_1$ is hydrogen or $C_1$-$C_5$alkyl which is unsubstituted or substituted by halogen, cyano, methoxy or hydroxyl; $Y_2$ is hydrogen, $C_{1(or\ 2)}$-$C_{12}$alkyl or $C_{1(or\ 2)}$-$C_{12}$alkoxy, each unsubstituted or substituted by methoxy, chlorine, bromine, cyano or hydroxy, or is $C_2$-$C_4$alkenyl, benzyl, phenyl or phenyl which is substituted by $C_1$-$C_5$alkyl; $Z_2$ is hydrogen or $C_1$-$C_6$alkoxy which is unsubstituted or substituted by methoxy or halogen, or denotes the atoms which, together with $Y_1$, are able to form a 5- or 6-membered, saturated or unsaturated ring which is unsubstituted or substituted by methyl, formyl, acetyl or carbomethoxy; $X_1$ is as defined above, and $m_1$ is 1 or 2.

2. A compound according to claim 1, of the formula

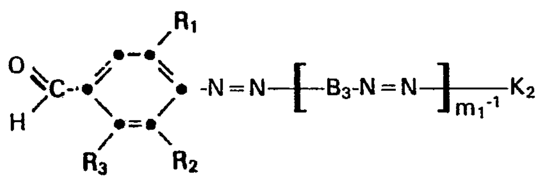

in which $B_3$ is

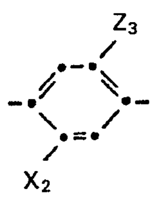

or

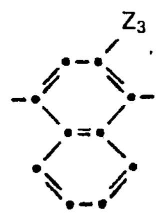

in which $X_2$ is $C_1$-$C_2$alkyl or $C_1$-$C_2$alkoxy, or is $-NHCOV_2$, in which $V_2$ is $C_1$-$C_4$alkyl or $C_1$-$C_4$alkoxy which can be substituted by halogen, by $C_1$-$C_{14}$alkoxy, by $-P(O)(OC_2H_5)_2$, by $C_2$-$C_5$carbalkoxy, by phenoxy or by alkylsubstituted phenoxy containing 1 to 5 carbon atoms in the alkyl moiety; or $X_2$ is $C_1$-$C_6$alkylsulfonylamino or is $-NHP(O)(OT_1)_2$, in which $T_1$ is as defined in claim 1; $Z_3$ is hydrogen, methoxy or ethoxy and $m_1$ and $K_2$ are as defined in claim 1.

3. A compound according to claim 2, of the formula

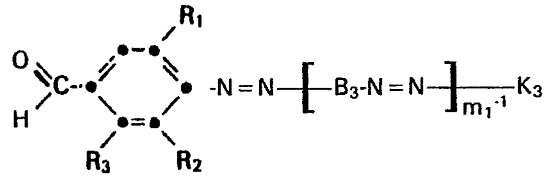

wherein $K_3$ is

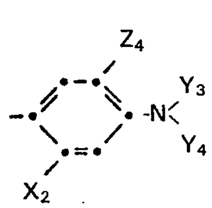

,

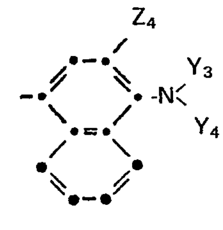

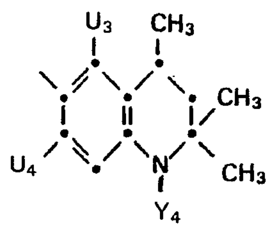

or

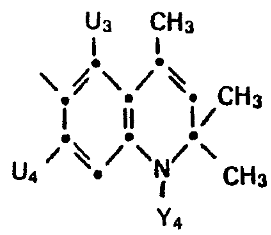

wherein $U_3$ und $U_4$ are hydrogen, $-NHCOA_2$, wherein $A_2$ is $C_1$-$C_4$alkyl, or are $C_1$-$C_4$alkyl or $C_1$-$C_4$alkoxy, with the proviso that one of $U_3$ and $U_4$ must always be hydrogen; $Y_3$ is hydrogen or $C_1$-$C_4$alkyl; $Y_4$ is hydrogen, $C_{1(or\ 2)}$-$C_8$alkyl or $C_{1(or\ 2)}$-$C_8$alkoxy, or is benzyl or phenyl; $Z_4$ is hydrogen or $C_1$-$C_4$alkoxy or denotes the atoms which, together with $Y_3$, form a 6-membered, saturated or unsaturated, methyl-substituted ring and $B_3$, $X_2$ and $m_1$ are as defined in claim 2.

4. Compound according to claim 3, of the formula

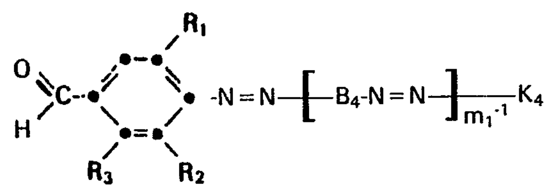

in which $B_4$ is

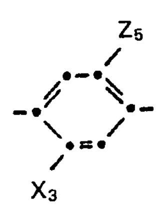

or

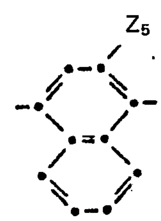

in which $X_3$ is $C_1$-$C_2$alkyl or $C_1$-$C_2$-alkoxy, or is $-NHCOV_3$, in which $V_3$ is $C_1$-$C_8$alkyl which is unsubstituted or substituted by fluorine, by $C_1$-$C_4$alkoxy, by $-P(O)(OC_2H_5)_2$, by $C_2$-$C_5$carbalkoxy, by phenoxy or by alkylsubstituted phenoxy containing 1 to 5 carbon atoms in the alkyl moiety; or $X_3$ is $C_1$-$C_6$alkylsulfonylamino or is $NHP(O)(OT_2)_2$, in which $T_2$ is unsubstituted or methoxy- or ethoxy-substituted $C_1$-$C_4$alkyl or is phenyl; $Z_5$ is hydrogen or methoxy, $K_4$ is

$K_4$

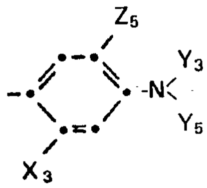

or

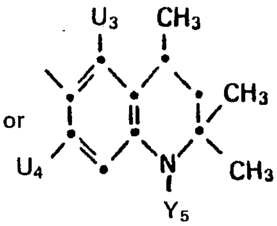

in which $Y_5$ is hydrogen, $C_{1(or\ 2)}$-$C_4$alkyl or $C_{1(or\ 2)}$-$c_4$alkoxyalkyl $X_3$ and $Z_5$ are as defined above and $Y_3$, $U_3$, $U_4$, and $m_1$ are as defined in claim 3.

5. A compound according to claim 4, of the formula

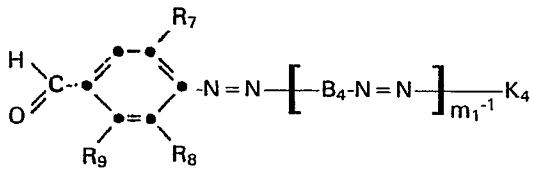

in which $R_7$ is hydrogen, $C_1$-$C_4$alkylsulfone, cyano or nitro, $R_8$ is chlorine, bromine, cyano or nitro, $R_9$ is hydrogen or methyl and $B_4$, $K_4$ and $m_1$ are as defined in claim 4.

6. A compound according to claim 5, of the formula

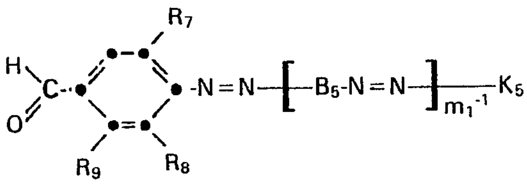

in which $B_5$ is

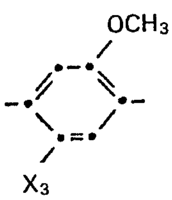

or

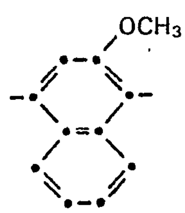

in which $X_3$ is as defined in claim 4, $K_5$ is

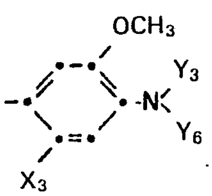

or

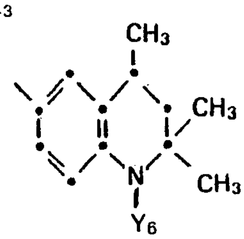

in which $Y_3$ is as defined in claim 4, $Y_6$ is hydrogen or $C_1$-$C_4$alkyl, $X_3$ is as defined above, and $R_7$, $R_8$, $R_9$ and $m_1$ are as defined in claim 5.

7. A compound according to claim 6, of the formula

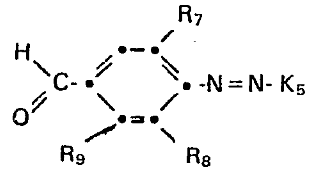

in which $R_7$, $R_8$, $R_9$ and $K_5$ are as defined in claim 6.

8. A compound according to claim 7, of the formula

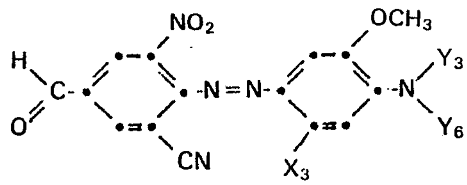

or

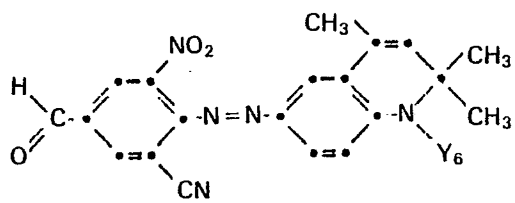

in which $X_3$, $Y_3$ and $Y_6$ are as defined in claim 6.

9 A process for the preparation of a compound according to claim 1, which comprises diazotising a compound of the formula

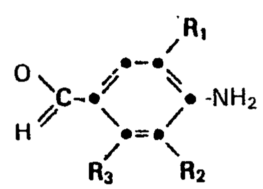

,

in which $R_1$, $R_2$ and $R_3$ are as defined in claim 1, and coupling the diazonium compound of the formula

H-$K_2$

in which $K_2$ is as defined in claim 1.

10. A process for the preparation of a compound according to claim 1, which comprises diazotising a compound of the formula

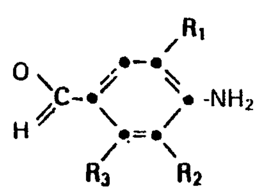

,

in which $R_1$, $R_2$ and $R_3$ are as defined in claim 1, and reacting the diazonium compound with a coupling component of the formula

$$H\text{-}B_2\text{-}NH_2$$

in which $B_2$ is as defined in claim 1, and diazotising again and coupling the product so obtained with a compound of the formula

$$H\text{-}K_2$$

in which $K_2$ is as defined in claim 1.

11. Use of a compound according to any one of claims 1 to 8 in a photographic material for the silver dye bleach process.

12. A photographic material for the silver dye bleach process which comprises, on a base, at least one layer containing a compound according to any one of claims 1 to 8.

13. A photographic image with a photographic material for the silver dye bleach process prepared according to claim 12.

**Revendications**

1. Composés ayant la formule:

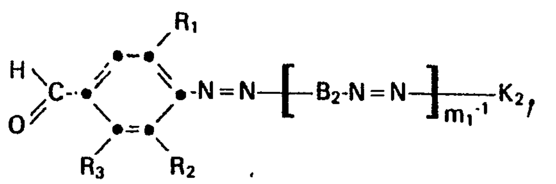

dans laquelle

$R_1$ est un atome d'hydrogène, un reste alkylsulfonyle ayant 1 à 8 atomes de carbone éventuellement substitué par un radical méthoxy, cyano ou halogéno, un atome d'halogène, un reste cyano ou nitro,

$R_2$ est un atome d'hydrogène, un atome d'halogène, un reste cyano ou nitro

$R_3$ est un atome d'hydrogène, un reste alkyle ayant 1 à 4 atomes de carbone, halogéno ou nitro,

$B_2$ est un reste de formule:

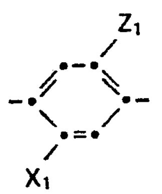 , 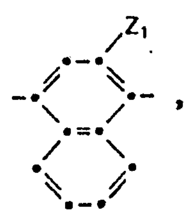 ,

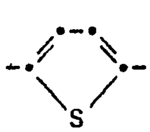 ou 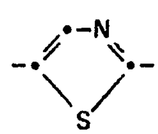

dans laquelle

$X_1$ est un reste alkyle ou alcoxy ayant chacun 1 à 6 atomes de carbone éventuellement substitué par un radical hydroxyle, méthoxy, chloro, bromo, cyano ou nitro, un reste alkylsulfonylamino ayant 1 à 8 atomes de carbone ou $-NHCOV_1$, dans lequel $V_1$ est un reste alkyle ayant 1 à 14 atomes de carbone, éventuellement substitué par de l'halogène; un radical alcoxy ayant 1 à 4 atomes de carbone, carbalcoxy ayant 2 à 5 atomes de carbone, phénoxy éventuellement substitué par un groupe alkyle ayant 1 à 5 atomes de carbone, un radical $-P(O)(OCH_3)_2$ ou $-P(O)(OC_2H_5)_2$ ou bien un reste alcoxy ayant 1 à 4 atomes de carbone ou bien $X_1$ est $-NHP(O)(OT_1)_2$ dans lequel $T_1$ est un reste alkyle ayant 1 à 8 atomes de carbone éventuellement substitué par un radical méthoxy ou éthoxy, un reste phényle ou benzyle, et $Z_1$ est un atome d'hydrogène ou un reste alcoxy ayant 1 à 6 atomes de carbone,

$K_2$ est un reste de formule:

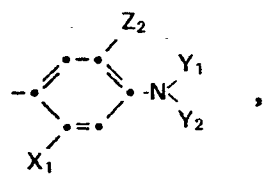 , 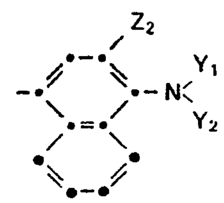 ,

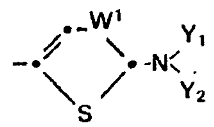 ,

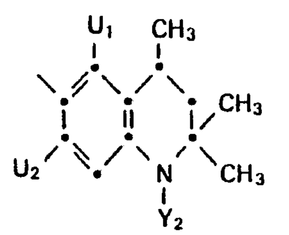 ou

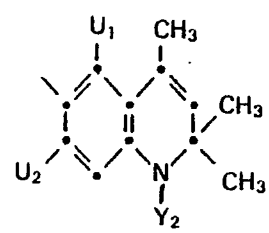

dans lesquelles

$U_1$ et $U_2$ sont des atomes d'hydrogène, $-NHCOA_1$, dans lequel $A_1$ est un radical alkyle ayant 1 à 4 atomes de carbone ou phényle, ou bien sont des restes alkyle ou alcoxy ayant chacun 1 à 4 atomes de carbone, un des substituants $U_1$ et $U_2$ désignant toujours un atome d'hydrogène; $W_1$ est $-CH=$ ou $-N=$; $Y_1$ est un atome d'hydrogène ou un reste alkyle ayant 1 à 5 atomes de carbone, éventuellement substitué par de halogène, un radical cyano, méthoxy, ou hydroxyle; $Y_2$ est un atome d'hydrogène, un reste alkyle ou alcoxyalkyle ayant chacun 1 (2) à 12 atomes de carbone, éventuellement substitué par un radical méthoxy, chloro, bromo, cyano ou hydroxyle, un reste alcényle ayant 2 à 4 atomes de carbone, benzyle ou un reste phényle éventuellement substitué par un radical alkyle ayant 1 à 5 atomes de carbone; $Z_2$

est un atome d'hydrogène ou un reste alcoxy ayant 1 à 6 atomes de carbone, éventuellement substitué par un radical méthoxy ou halogéno, ou bien $Z_2$ désigne ceux des atomes pour former conjointement avec $Y_1$ un cycle à 5 ou 6 chaînons, saturé ou insaturé, eventuellement substitué par un radical méthyle, formyle, acétyle ou carbométhoxy,
$X_1$ a la signification donnée ci-dessus et
$m_1$ vaut 1 ou 2.

2. Composés selon la revendication 1, caractérisés par le fait qu'ils correspondent à la formule:

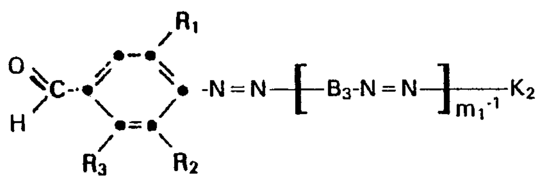

dans laquelle:
$B_3$ est

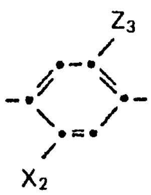

ou

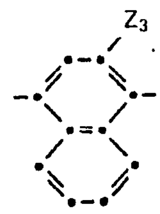

dans lesquelles:
$X_2$ est un reste alkyle ou alcoxy ayant chacun 1 ou 2 atomes de carbone ou bien $-NHCOV_2$, dans lequel $V_2$ est un radical alkyle ayant 1 à 14 atomes de carbone, éventuellement substitué par de l'halogène, alcoxy ayant 1 à 4 atomes de carbone, $-P(O)(OC_2H_5)_2$, carbalcoxy ayant 2 à 5 atomes de carbone, phénoxy ou phénoxy alkylé ayant 1 à 5 atomes de carbone dans le groupe alkyle, ou bien un reste alcoxy ayant 1 à 4 atomes de carbone; ou bien $X_2$ est un reste alkylsulfonylamino ayant 1 à 6 atomes de carbone ou $-NHP(O)(OT_1)_2$, dans lequel $T_1$ a la signification donnée dans la revendication 1; $Z_3$ est un atome d'hydrogène, un reste méthoxy ou éthoxy, et $m_1$ et $K_2$ ont la signification donnée dans la revendication 1.

3. Composés selon la revendication 2, caractérisés par le fait qu'ils correspondent à la formule:

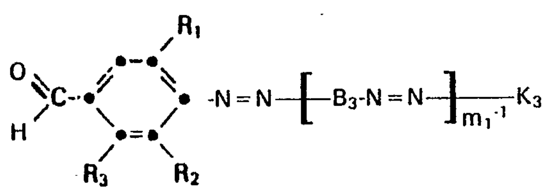

dans laquelle
$K_3$ est

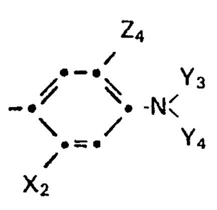

,

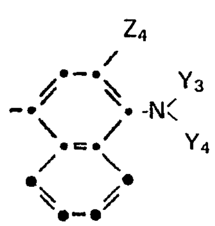

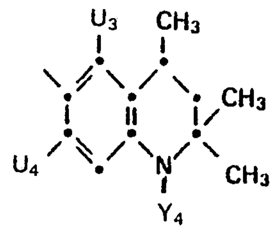

ou

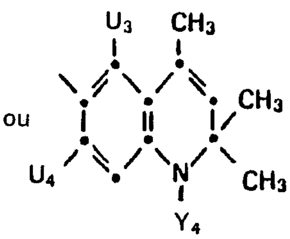

dans lesquelles
$U_3$ et $U_4$ sont des atomes d'hydrogène, $-NHCOA_2$, dans lequel $A_2$ est un groupe alkyle ayant 1 à 4 atomes de carbone; des restes alkyle ou alcoxy ayant chacun 1 à 4 atomes de carbone, un des substituants $U_3$ et $U_4$ désignant toujours un atome d'hydrogène;
$Y_3$ est un atome d'hydrogène ou un reste alkyle ayant 1 à 4 atomes de carbone;
$Y_4$ est un atome d'hydrogène, un reste alkyle ou alcoxyalkyle ayant chacun 1 (2) à 8 atomes de carbone, benzyle ou phényle,
$Z_4$ est un atome d'hydrogène ou un reste alcoxy ayant 1 à 4 atomes de carbone ou bien $Z_4$ désigne ceux des atomes pour former conjointement avec $Y_3$ un cycle à 6 chaînons, saturé ou insaturé, substitué par le radical méthyle, et
$B_3$, $X_2$ et $m_1$ ont les significations données dans la revendication 2.

4. Composés selon la revendication 3, caractérisés par le fait qu'ils correspondent à la formule:

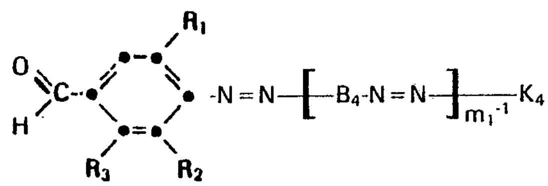

dans laquelle
$B_4$ est

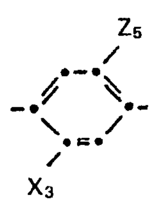

ou

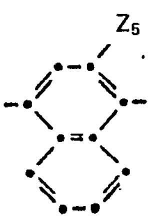

dans lesquelles
$X_3$ est un reste alkyle ou alcoxy ayant chacun 1 ou 2 atomes de carbone ou bien $-NHCOV_3$ dans lequel $V_3$ est un reste alkyle ayant 1 à 8 atomes de carbone, éventuellement substitué par du fluor, un radical alcoxy ayant 1 à 4 atomes de carbone, $-P(O)-(OC_2H_5)_2$, carbalcoxy ayant 2 à 5 atomes de carbone, phénoxy ou phénoxy alkylé avec 1 à 5 atomes de carbone dans la partie alkyle, ou bien $X_3$ est un reste alkylsulfonylamino ayant 1 à 6 atomes de carbone, ou bien $-NHP(O)(OT_2)_2$, dans lequel $T_2$ est un reste alkyle ayant 1 à 4 atomes de carbone, éventuellement substitué par un radical méthoxy ou éthoxy ou bien un reste phényle; $Z_5$ est un atome d'hydrogène ou un reste méthoxy

$K_4$ est

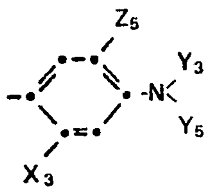

ou

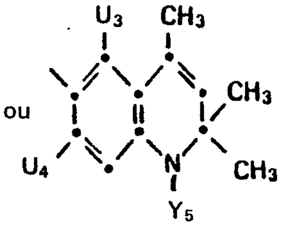

dans laquelle
$Y_5$ est un atome d'hydrogène, un reste alkyle ou alcoxyalkyle ayant chacun 1 (2) à 4 atomes de carbone;
$X_3$ et $Z_5$ ont les significations données ci-dessus, et
$Y_3$, $U_3$, $U_4$ et $m_1$ ont les significations données dans la revendication 3.

5. Composés selon la revendication 4, caractérisés par le fait qu'ils correspondent à la formule:

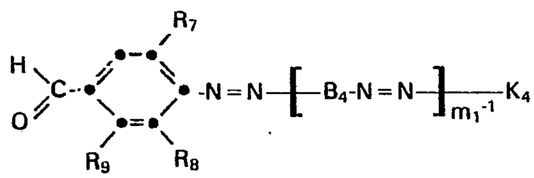

dans laquelle
$R_7$ est un atome d'hydrogène, un reste alkylsulfonyle ayant 1 à 4 atomes de carbone, cyano ou nitro;
$R_8$ est du chlore, du brome, un reste cyano ou nitro;
$R_9$ est un atome d'hydrogène ou un reste méthyle, et
$B_4$, $K_4$ et $m_1$ ont les significations données dans la revendication 4.

6. Composés selon la revendication 5, caractérisés par le fait qu'ils correspondent à la formule:

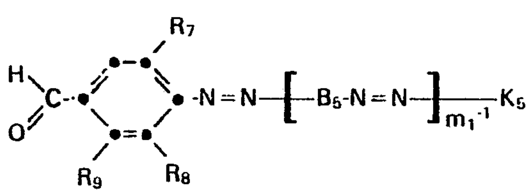

dans laquelle
$B_5$ est

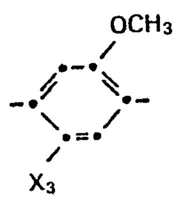

ou

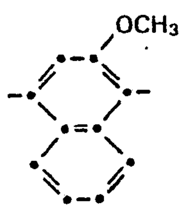

dans lesquelles
$X_3$ a la signification donnée dans la revendication 4,

$K_5$ est

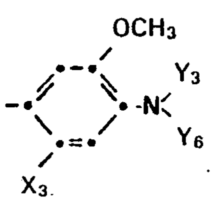

ou

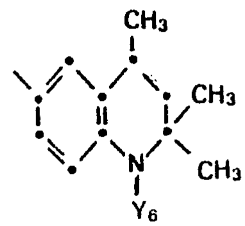

dans lesquelles
$Y_6$ est un atome d'hydrogène ou un reste alkyle ayant 1 à 4 atomes de carbone;
$X_3$ a la signification donnée ci-dessus, et
$Y_3$ a la signification donnée dans la revendication 4, et
$R_7$, $R_8$, $R_9$ et $m_1$ ont les significations données dans la revendciation 5.

7. Composés selon la revendication 6, caractérisés par le fait qu'ils correspondent à la formule:

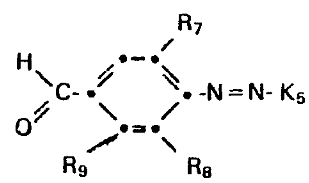

dans laquelle
$R_7$, $R_8$, $R_9$ et $K_5$ ont les significations données dans la revendication 6.

8. Composés selon la revendication 7, caractérisés par le fait qu'ils correspondent aux formules:

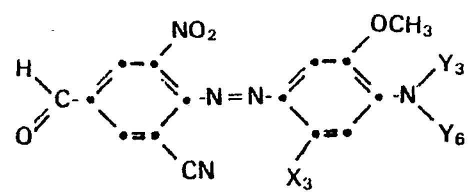

ou

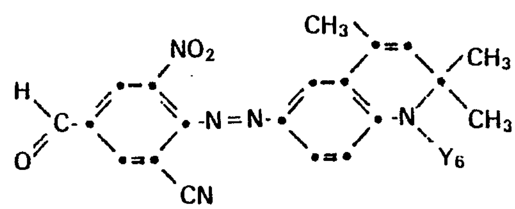

dans lesquelles
$X_3$, $Y_3$ et $Y_6$ ont les significations données dans la revendication 6.

9. Procédé pour la préparation des composés selon la revendication 1, caractérisé par le fait qu'on diazote un composé de formule:

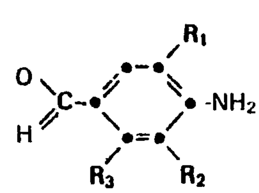

dans laquelle $R_1$, $R_2$ et $R_3$ ont les significations données dans la revendication 1, puis qu'on copule avec un composé de formule:

$$H\text{-}K_2$$

dans laquelle $K_2$ a la signification donnée dans la revendication 1.

10. Procédé pour la préparation des composés selon la revendication 1, caractérisé par le fait qu'on diazote un composé de formule:

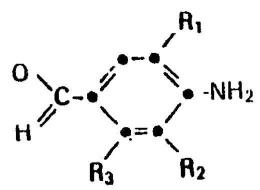

dans laquelle $R_1$, $R_2$ et $R_3$ ont les significations données dans la revendication 1, puis qu'on fait réagir avec un copulant de formule

$$H\text{-}B_2\text{-}NH_2$$

dans laquelle $B_2$ a la signification donnée dans la revendication 1, puis qu'on diazote de nouveau et qu'on copule avec un composé de formule:

$$H\text{-}K_2$$

dans laquelle $K_2$ a la signification donnée dans la revendication 1.

11. Utilisation des composés selon l'une quelconque des revendications 1 à 8, dans un matériau photographique pour le procédé de blanchiment des couleurs à l'argent.

12. Matériau photographique pour le blanchiment des couleurs à l'argent, caractérisé par le fait qu'il contient sur un support au moins une couche renfermant un composé selon l'une quelconque des revendications 1 à 8.

13. Image photographique obtenue avec le matériau photographique pour le procédé de blanchiment des couleurs à l'argent selon la revendication 12.